(19) **Europäisches Patentamt European Patent Office Office européen des brevets**

(11) **EP 4 276 556 B1**

(12) **EUROPEAN PATENT SPECIFICATION**

(45) Date of publication and mention
of the grant of the patent:
**31.12.2025 Bulletin 2026/01**

(51) International Patent Classification (IPC):
**B29C 64/386** (2017.01)     **B33Y 50/00** (2015.01)
**G05B 19/418** (2006.01)     **G05B 19/4099** (2006.01)

(21) Application number: **23194902.5**

(52) Cooperative Patent Classification (CPC):
**G05B 19/4099; B29C 64/386; B33Y 50/00;
G05B 19/41865**

(22) Date of filing: **07.10.2021**

(54) **3D PRINTING PLANNING**

3D-DRUCKPLANUNG

PLANIFICATION D'IMPRESSION 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.11.2023 Bulletin 2023/46**

(62) Document number(s) of the earlier application(s) in
accordance with Art. 76 EPC:
**21306413.2 / 4 163 086**

(73) Proprietor: **Dassault Systèmes
78140 Vélizy-Villacoublay (FR)**

(72) Inventors:
• **TLILI, Ali**
  **Vélizy-Villacoublay (FR)**
• **KHALED, Oumaima**
  **Vélizy-Villacoublay (FR)**
• **ORTUZAR DEL CASTILLO, Auxkin**
  **Vélizy-Villacoublay (FR)**

(74) Representative: **Bandpay & Greuter
11 rue Christophe Colomb
75008 Paris (FR)**

(56) References cited:
**US-A1- 2020 047 414**

• BERTOLINI MASSIMO ET AL: "A TOPSIS-based
approach for the best match between
manufacturing technologies and product
specifications", EXPERT SYSTEMS WITH
APPLICATIONS, ELSEVIER, AMSTERDAM, NL,
vol. 159, 7 June 2020 (2020-06-07), XP086264464,
ISSN: 0957-4174, [retrieved on 20200607], DOI:
10.1016/J.ESWA.2020.113610
• TLILI ALI ET AL: "Learning non-compensatory
sorting models using efficient SAT/MaxSAT
formulations", EUROPEAN JOURNAL OF
OPERATIONAL RESEARCH, ELSEVIER,
AMSTERDAM, NL, vol. 298, no. 3, 19 August 2021
(2021-08-19), pages 979 - 1006, XP086916305,
ISSN: 0377-2217, [retrieved on 20210819], DOI:
10.1016/J.EJOR.2021.08.017

**Description**

**TECHNICAL FIELD**

The disclosure relates to the field of computer programs and systems, and more specifically to a method, system and program for 3D printing planning.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Within this context and other contexts, 3D printing, also referred to as "additive manufacturing", is gaining wide importance.

Also known is document US2020/0047414 A1, which discloses a system that includes an interface to receive data from a number of sensors coupled to components of a device to monitor health of each of those components and a processor and memory to, in response to a determination that a first of the components is to be replaced, locate an additive manufacturing device that is capable of fabrication of a replacement component without interrupting fabrication cycles of that additive manufacturing device before the first component fails and to instruct fabrication of the replacement component.

Within this context, there is still a need for improved solutions for 3D printing planning.

**SUMMARY**

The invention is defined by the appended claims.

**BRIEF DESCRIPTION OF THE DRAWINGS**

Non-limiting examples will now be described in reference to the accompanying drawings, where:

- FIG.s 1 to 10 illustrate the method; and

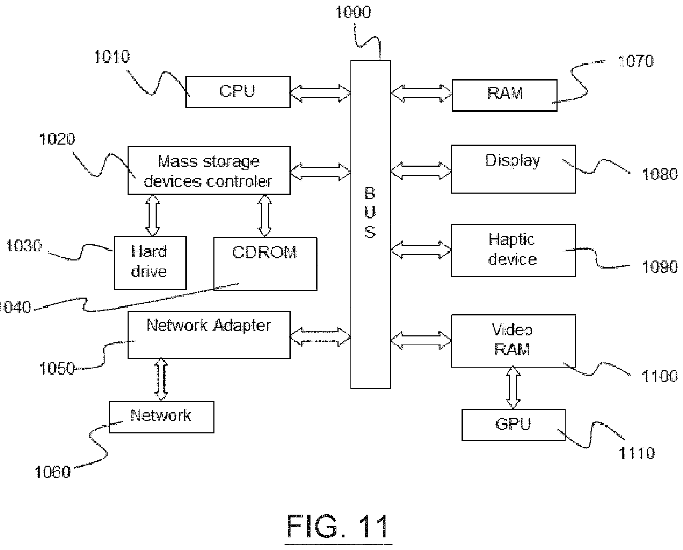

- FIG. 11 illustrates the system.

**DETAILED DESCRIPTION**

It is proposed a computer-implemented method for 3D printing planning. The method comprises providing a set of spare parts to be manufactured in one or more factories comprising 3D printers and other manufacturing machines. The method further comprises providing 3D printing constraints. The 3D printing constraints include one or more constraints each representing a 3D printing constraint and/or a mechanical constraint for a spare part. The 3D printing constraints further include one or more 3D printing capacity constraints for the one or more factories. The method further comprises providing a reference set of one or more spare parts each classified either as compatible with the 3D printing constraints or as non-compatible with the 3D printing constraints. The method further comprises determining an optimal subset of the set of spare parts to be 3D printed. The determining includes optimizing one or more objective manufacturing functions under the 3D printing constraints and based on the reference set.

Such a method forms an improved solution for 3D printing planning.

Notably, given an input set of spare parts (*i.e.* the provided set of spare parts) and 3D printing constraints, the method outputs a subset (*i.e.* the optimal subset) of the input set of spare parts which is (or at least tend to be) optimal for one or more objective manufacturing functions under the 3D printing constraints. The output subset is made of spare parts to be 3D printed. In other words, the method allows to, given a set of spare parts to be manufactured, determine a subset of spare parts that is to be 3D printed, that is optimal (or at least tends to be) with respect to one or more objective manufacturing functions, and that is compatible with the provided 3D printing constraints (*e.g.* fulfills them, *e.g.* to a certain extent).

The constraints capture (*i.e.* describe, represent) the 3D printing limited capacities of the one more factories (captured by the one or more 3D printing capacity constraints), and the incompatibility of some spare parts with the 3D printing (captured with the one or more constraints each representing a 3D printing constraint and/or a mechanical constraint for a spare part). The one or more manufacturing functions capture one or more manufacturing objective(s), such as reducing the carbon footprint caused by the 3D printing and/or reducing the time of the overall manufacturing process (*i.e.* the lead time). The method thus outputs a set of spare parts which is (or at least tends to be) compatible with the 3D printing limited capacities of the one or more factories and with the incompatibility of some spare parts with the 3D printing, while fulfilling (or at least tending to fulfill) one or more manufacturing objective(s). In other words, the method provides, through the achievement of the one or more manufacturing objective(s), an objective balance, in the form of the optimal set (which is objective with respect to the constraints and manufacturing function(s)), between the theoretical possibility of 3D printing all the spare parts and the practical limitations of 3D printing all the spare parts. This balance is achieved by fulfilling (*e.g.* to a certain extent) the one or more manufacturing objective(s), which contribute(s) to discriminate spare parts to be 3D printed from others. In yet other words, by optimizing one or more objective manufacturing functions capturing one or more manufacturing objectives under the constraints, the method prioritizes within the provided set of spare parts, some spare parts (*i.e.* forming the optimal set) for 3D printing relative to other spare parts, for achieving the manufacturing objective(s) under the constraints. This improves 3D printing planning.

Indeed, 3D printing of any number and/or type of spare parts, while possibly theoretically feasible, is in the practical manufacturing reality not feasible, *e.g.* since the resources needed for the 3D printing are limited (the one or more factories that are to produce the spare parts comprise manufacturing machines which are not 3D printers, and may comprise a limited number of 3D printers) and/or cannot in practice be dedicated to the sole manufacturing of spare parts and/or since some spare parts are technically not compatible with 3D printing. In the meantime, there is a need in the industry to manufacture spare parts by 3D printing as 3D printing is a manufacturing technology that meets the challenges, often associated with other manufacturing techniques for spare parts, of great variability (*i.e.* 3D printing may be used to produce a great variability of mechanical parts, which may be the case within a set of spare parts that may include a great variability of parts), long time (*i.e.* the 3D printing may reduce the manufacturing time and may thus improve the manufacturing speed, which allows to produce spare parts faster, for example on demand, and thus to use them faster for part replacement), low demand (*i.e.* 3D printing is well-suited for production of a small quantities of parts, for example on demand, which may be the case for spare parts, since the spare parts are made only for part replacement and may thus be manufactured in lesser quantities than the original parts), and/or high stock rupture costs. Furthermore, some spare parts may be parts that have been manufactured for the first time in the past (e.g. several years in the past), and for which the original manufacturing lines do not exist anymore. 3D printing is a manufacturing solution for manufacturing these parts for which the original manufacturing lines do not exist anymore, since 3D printing is a computer-based manufacturing process that only requires for the manufacturing a CAD model of the spare part to be manufactured. 3D printing may thus be efficiently used to manufacture spare parts for which the manufacturing lines do not exist anymore. In other words, there is a need in the industry to manufacture spare parts using 3D printing. However, the number of spare parts that may actually be 3D printed is in practice limited by other manufacturing considerations, as previously discussed. The method thereby improves the spare part 3D printing planning in that the method provides as previously discussed an objective balance, in the form of the optimal set (which is objective with respect to the constraints and manufacturing function(s)), between the industrial need for spare part 3D printing and the practical limitations to this need, thereby prioritizing the spare parts which are to be 3D printed given one or more objective manufacturing functions and 3D printing constraints. In other words, the method allows to prioritize the spare parts to be 3D printed given objective manufacturing considerations.

The method may form a 3D printing process of spare parts (i.e. a process of 3D printing spare parts) or may be included in a 3D printing process of spare parts that comprises the method. The method may notably comprise establishing a 3D printing plan for the one or more factories based on the determined optimal set of spare parts. Establishing the 3D printing plan may include assigning 3D printing tasks to the 3D printers of the one or more factories, *i.e.* allocating the manufacturing of the spare parts of the optimal set to the different 3D printers of the one or more factories so that the 3D printers may then 3D print the optimal set of spare parts according to this allocation. Thereby, the subsequent 3D printing process tends to optimize the objective manufacturing function(s) while printing spare parts compatible with the constraints. The method may further comprise 3D printing of the optimal set in the one or more factories, *i.e.* the method may further comprise performing the 3D printing of the optimal set of spare parts. The 3D printing is performed based on (*i.e.* in accordance with, in a manner that respects) the established 3D printing plan.

The method may be included in a part replacement process, which comprises one or more iterations (*e.g.* of a same time frame, *e.g.* weekly) of:

- receiving a spare parts order from one or more companies, the spare parts order consisting in a set of spare parts to be 3D printed;
- performing the method, where the spare parts order forms the provided set of spare parts, thereby outputting the optimal set of spare parts;
- establishing a 3D printing plan according to the optimal set of spare parts and performing the 3D printing of the optimal set of spare according to the 3D printing plan;
- optionally, manufacturing the other spare parts of the spare parts order by one or more other manufacturing processes (i.e. other than 3D printing);
- using, by the one or more companies, the 3D printed spare parts, and optionally said other spare parts, to replace existing mechanical parts *(e.g.* old and/or damaged mechanical parts).

In the above iterations, at each iteration, the one or more operator(s) of the one or more factories may change, at least partly, the one or more manufacturing functions may be changed by, thereby changing the manufacturing objective(s) from one iteration to the other while respecting the order. In any case, the overall process, by using the method, provides to the one or more companies with 3D spare parts to be used to replace existing mechanical parts, where the 3D spare parts have been manufactured in a manner that objectively balances, optimally with respect to the manufacturing objective(s), the need for 3D printed spare parts and the practical limitations to 3D printing.

That being said, as previously discussed, the 3D printing constraints include both one or more constraints each representing a 3D printing constraint and/or a mechanical constraint for a spare part and one or more 3D printing capacity constraints for the one or more factories. The first constraints (i.e. 3D printing and/or a mechanical constraints for spare parts) are intrinsic to the spare parts and each capture whether a spare part is objectively (i.e. from a mechanical and/or manufacturing viewpoint) compatible with 3D printing. The second constraints (i.e. the 3D printing capacity constraints) are constraints relative to the overall 3D printing capacity of the one or more factories. These constraints capture, e.g. in terms of resources (*e.g.* available material) and/or intrinsic 3D printing capacities (*e.g.* number and/or type of machines), the overall capacity of the one or more factories to 3D print a set of spare parts. Thereby the method prioritizes the spare parts to be 3D printed based on both constraints intrinsic to the spare parts and constraints capturing the overall capacity of the one or more factories to 3D print a set of spare parts. The method is thereby able to take into account both constraints intrinsic the individual spare parts and constraints intrinsic to the 3D printing capacity of the overall factories. This allows to evaluate not only each spare parts individually with respect to their intrinsic constraints, but also to evaluate spare part sets, which may be referred to as "portfolios", with respect to 3D printing capacity constraints for a spare part set. This provides robustness of the 3D printing planning. Furthermore, these constraints that the method takes into account may not be independent, e.g. the fulfillment of one or more constraints may impact the fulfillment of one or more other constraints. In other words, the method may perform the optimization even if at least some of the constraints depend on each other, which may often be the case in the real-world industry. This further provides robustness of the 3D printing planning.

Furthermore, the optimal subset of spare parts to be 3D printed is not determined only based on the 3D printing constraints, but also based on the one or more objective manufacturing functions. The optimization of the latter function(s) indeed leads to the optimal subset. This allows to prioritize the spare parts to 3D print not only based on 3D constraints, but also in order to optimize one or more objective manufacturing functions, which capture one or more manufacturing objectives. In other words, this allows to prioritize the spare parts to 3D print based on the 3D constraints but also for achieving one or more manufacturing goals (e.g. reducing the carbon footprint caused by the manufacturing process) captured by the objective function(s). These/this objective manufacturing goal(s) and the optimization with respect to them/it allow to objectively balance the need for spare parts 3D printing with the practical limitations thereof, by discriminating spare part portfolios from others with respect to the manufacturing goal(s).

Moreover, the optimization of the objective manufacturing function(s) is not solely based on the 3D printing constraints, but also on the provided reference set. The provided reference set is a set of one or more spare parts each classified either as compatible with the 3D printing constraints or as non-compatible with the 3D printing constraints. In other words, this set constitutes a reference set of spare parts each already considered compatible or not-compatible with the 3D printing constraints. The optimization being based on this reference set, this reference set guides the optimization in determining a set of spare parts which is compatible with the 3D printing constraints.

The reference set may for example be provided by a user (*e.g.* an employee of a company ordering the manufacturing of the provided set of spare parts or an operator of the one or more factories). This allows the user to intervene in the 3D printing planning process and to guide the optimization, so that the optimal subset ultimately meets the user's requirements. In other words, this provides flexibility in the 3D printing planning where the user is provided with the possibility of guiding the optimization. The method may thereby output an optimal subset of spare parts objectively yielded by the constraints and the objective function(s) in response to the user-provided reference set of spare parts, thereby objectively assisting the user in the 3D printing planning process. The method thereby forms an ergonomically-improved 3D printing planning solution.

Besides or instead of intervening in the providing of the reference set, a user (*e.g.* an employee of a company ordering the manufacturing of the provided set of spare parts or an operator of the one or more factories) may in examples also or instead intervene in the determining of the optimal subset. The user may for example provide one or more target values for the objective function(s) (*e.g.* a maximal amount of $CO_2$ emissions), thereby guiding the optimization towards a result meeting the user requirements. The determining of the optimal subset may in these examples comprise several optimizations of the one or more objective manufacturing functions, where, before each optimization, the user provides the one or more target values and/or modifies the one or more target values based on a result of a previous optimization. This allows the user to act on the optimization and to guide it toward a result meeting his/her requirements, *i.e.* an optimal portfolio. This intervention of the user in the determining as allowed by the method thereby increases flexibility of the 3D printing planning and assists the user in the 3D printing planning, providing the user with an optimal spare parts portfolio that objectively meets (or tends to meet) the target values provided by the user. This as well makes the method form an ergonomically-improved 3D printing planning solution.

In any case, the method may thereby, in the providing of the reference set and/or in the determining of the optimal subset, allow a user to input his/her preferences so that they are taken into account when objectively assessing which spare parts are to be 3D printed. This adds some transparency to the selection process and provides an enhanced assistance in 3D printing planning for the practitioners.

The method is for 3D printing planning.

As known *per se,* 3D printing refers to a manufacturing technique where a computer-controlled production process creates three dimensional objects by depositing materials, usually in layers (*i.e.* a complete mechanical part is built up layer by layer from basic materials). 3D printing may also be referred to as "additive manufacturing". In contrast, subtractive manufacturing processes remove materials from a larger work piece to obtain the part. 3D printing is a promising technology for the production of spare parts, as it meets the challenges of great variability, long time, low demand and high stock rupture costs associated with the traditional manufacturing of spare parts.

3D printing planning designates any process of elaborating a 3D printing plan. Such process may comprise a determination of parts to 3D print, establishing an order of 3D printing, selecting 3D printers, and/or assigning 3D printing tasks to 3D printers. In the case of the method, the method determines a set of spare parts (the optimal subset) to be 3D printed. The method may comprise further downstream planning steps such as establishing an order of 3D printing, selecting 3D printers, and/or assigning 3D printing tasks to 3D printers. These steps may altogether form the step of establishing the 3D printing plan that the method comprises in examples.

The method comprises providing inputs to the optimization.

The inputs include a set of spare parts to be manufactured in one or more factories comprising 3D printers and other manufacturing machines. The set of spare parts is a set of spare parts that the one or more factories may altogether manufacture, *i.e.* the spare parts of the set are manufacturable, and to be manufactured, by the one or more factories. Each spare part may be manufactured by one or more of the factories (*e.g.* by only one of them, specialized in manufacturing the part, or by all of them), either by a 3D printer or by another manufacturing machine. The factories comprise 3D printers and other manufacturing machines, *i.e.* each factory comprises one or more 3D printers and/or one or more other manufacturing machines, but the factories altogether comprise 3D printers and other manufacturing machines. The other manufacturing machines may include any set of other manufacturing machines, *i.e.* any set of machines which are not 3D printers. The set of spare parts to be manufactured may be provided by a user (*e.g.* an employee of a company ordering the manufacturing of the provided set of spare parts). For example, the set of spare parts may be an order received from one or more companies needing spare parts, such as a company specialized in part replacement. The spare parts of the set may comprise several types of spare parts (*e.g.* different spare parts for different car parts), and may comprise for each type one or more spart parts of this type. The providing of the set of spare parts may include providing data about the performances of the spare parts with respect to the 3D printing constraints and the objective manufacturing function(s). This data may comprise for each spare part data indicating an extent of respect of one or more of the constraints by the spare part and a performance of the spare part with respect to the objective manufacturing function(s) (*e.g.* a value of the function(s) for the spare part).

Each spare part of the set is a mechanical part or an assembly of mechanical parts, and may belong to various and unlimited industrial fields, including: aerospace, architecture, construction, consumer goods, high-tech devices, industrial equipment, transportation, marine, and/or offshore oil/gas production or transportation. The spare part may thus be any mechanical part, such as a part of a terrestrial vehicle (including *e.g.* car and light truck equipment, racing cars, motorcycles, truck and motor equipment, trucks and buses, trains), a part of an aerial vehicle (including *e.g.* airframe equipment, aerospace equipment, propulsion equipment, defense products, airline equipment, space equipment), a part of a naval vehicle (including *e.g.* navy equipment, commercial ships, offshore equipment, yachts and workboats, marine equipment), a general mechanical part (including *e.g.* industrial manufacturing machinery, heavy mobile machinery or equipment, installed equipment, industrial equipment product, fabricated metal product, tire manufacturing product), an electro-mechanical or electronic part (including *e.g.* consumer electronics, security and/or control and/or instrumentation products, computing and communication equipment, semiconductors, medical devices and equipment), a consumer good (including *e.g.* furniture, home and garden products, leisure goods, fashion products, hard goods retailers' products, soft goods retailers' products), a packaging (including *e.g.* food and beverage and tobacco, beauty and personal care, household product packaging).

The inputs further include 3D printing constraints. The 3D printing constraints may be captured by a set of one or more equations. The providing of the 3D printing constraints may include providing the one or more equations. The 3D printing constraints include one or more constraints each representing a 3D printing constraint and/or a mechanical constraint for a spare part. These one or more constraints may be referred to as "Go/No-Go constraints" or "Go/No-Go criteria". Each respective one of these one or more constraints is a constraints intrinsic to a spare parts or a type of spare parts and capture whether the spare part or type of spare parts is manufacturable by 3D printing. These one or more constraints may include one or more of the following constraints, which may be referred to as "evaluation criteria": demand rate, resupply lead time, agreed response time, remaining usage period, manufacturing/order costs, safety stock costs, number of supply options, and/or supply risk. These one or more constraints may alternatively or additionally include one or more of the following constraints, which may be referred to as "technical constraints": part size, build volume, appropriate material, water and temperature resistance, post-production shrinkage, strength to weight ratio and stiffness to weight ratio, required dimensional accuracy, build speed, layer thickness, support materials, and/or post processing. The 3D printing constraints further include one or more 3D printing capacity constraints for the one or more factories, which may be referred to as "portfolio constraints". These one or more 3D printing capacity constraints capture the overall 3D printing capacity of the one or more factories, for example by representing the limited capacity of tools (*e.g.* 3D printers) used in 3D printing. The 3D printing constraints may be provided by a user of the method (*e.g.* an employee of a company ordering the manufacturing of the provided set of spare parts or an operator of the one or more factories), for example by the user selecting the 3D printing constraints within a predefined list of 3D printing constraints.

The inputs further include a reference set of one or more spare parts. The reference set may be a subset of the provided set. Each spare part of the reference set is classified either as compatible with the 3D printing constraints or as non-compatible with the 3D printing constraints. A spare part is compatible with the 3D printing constraints when the spare part fulfills the 3D printing constraints, *e.g.* to a certain extent (*e.g.* up to a tolerance threshold) or totally (*i.e.* the part fulfills each 3D printing constraint). The reference set thus consists of spare parts for which it is known, for each of them, whether they are compatible with the 3D printing constraints or not.

The providing of the reference set may be carried out by the user (i.e. the reference set is provided by the user, *e.g.* an employee of a company providing the spare part order which forms the provided set of spare parts, or an operator of the one or more factories). The user may for example label each spare part of the reference set as compatible or not with the constraints. This allows the user to intervene upstream to the determining of the optimal set, to guide the optimization by providing data (*i.e.* the reference set) that guide the optimization. The user may provide the reference set, either explicitly or implicitly. Explicitly means that the user classifies (*e.g.* in response to the system asking him/her to classify) a set of spare parts (*e.g.* a subset of the provided set) as compatible with the 3D printing constraints or not, and this set forms the reference set. Implicitly means that the system is provided with (*e.g.* accesses, *e.g.* upon a user action) a history of examples of spare parts for which previous classification decisions (*i.e.* classifications of the spare parts as compatible or not with the constraints) have been taken and validated by the user. Consequently, this history forms the reference set.

Further to the providing of the inputs, the method comprises determining an optimal subset of the provided set of spare parts. The determining of the optimal subset is now discussed.

The determining of the optimal subset may comprise a preliminary step of verifying the consistency the reference set with the 3D printing constraints and modifying the reference set as long as the reference set is inconsistent. In other words, the preliminary step precedes the optimization, and in this case the optimization may only start when the reference set is consistent with the 3D printing constraints. By "inconsistent", it is meant that the optimization cannot be carried out with this reference set and for these 3D printing constraints. For example, when the optimization learns parameters of a sorting model as discussed hereinafter, "inconsistent" means that no such parameters may be learnt so that the model provides the same classification of the reference spare parts as that provided in the reference set. In other words, there exists no model that restores the reference set. The modification of the reference set may be performed by a user (*e.g.* the same user that provides the reference set). For example, the preliminary step may consist of one or more iterations of:

- the user provides the reference set and/or modifies the reference previously provided and/or modified at the previous iteration;
- the system checks the consistency of the reference set with the 3D printing constraints (for example by solving the constraints for the reference set); and
- if there is no consistency of the reference set with the 3D printing constraints, the preliminary step goes to the next iteration, and if there is consistency, the preliminary step ends.

The optimal subset is the output of the determining, and consists in spare parts to be 3D printed, i.e. the subset is a subset of the provided set of spare parts made of spare parts which are all to be 3D printed. The determining of the optimal subset includes optimizing the one or more objective manufacturing functions under the 3D printing constraints and based on the reference set. The optimal subset is thereby optimal with respect to the one or more objective manufacturing functions and the 3D printing constraints, *i.e.* the optimal subset optimizes, or at least tends to optimize, the one or more objective manufacturing functions under the 3D printing constraints. This means in other words that that the optimizing searches among the possible subsets of the provided set of spare parts for a subset (*i.e.* the optimal one) that is compatible with the 3D printing constraints and that optimizes, or at least tends to optimize, the one or more objective manufacturing functions. The optimization is based on the reference set, which is a set of one or more spare parts each classified as compatible or not with the 3D printing constraints. In other words, the optimization takes into account this reference set, that guides the optimization into deciding whether a spare part is compatible with the 3D printing constraints or not. In yet other words, the reference set forms a solution to the 3D printing constraints that is taken into account for the optimization.

The determining outputs the optimal subset of the set of spare parts, which is a subset of the provided set of spare parts consisting of the spare parts to be 3D printed. The remaining spare parts of the provided set may then be spare parts to be manufactured by one or more other manufacturing techniques/processes (*i.e.* processes or techniques which are not 3D printing). The determining thus prioritizes, within the provided set of spare parts and with the aim of optimizing the objective function(s) under the 3D printing constraints, parts to be 3D printed relative to other parts. The output of the method is thus a portfolio, consisting of the spare parts to be 3D printed (i.e. the optimal subset) and optionally of other spare parts to be manufactured with one or more other manufacturing techniques/processes.

The optimization optimizes the one or more objective manufacturing functions under the constraints. In other words, the optimization solves, or at least attempts to solve (*e.g.* up to a convergence or stopping criterion), an optimization problem consisting in maximizing and/or minimizing the value(s) of the objective function(s), *i.e.* one or more objective function(s) are to be maximized and/or one or more objective function(s) are to be minimized, under the constraints. The optimization problem may be a minmax optimization problem, *e.g.* formulated with Sat and/or Max-sat encoding. The optimization searches for an optimal subset of spare parts which is compatible with the constraints and which optimizes the value(s) of the objective function(s). Each objective manufacturing function is a function that captures a manufacturing goal/objective. For example, each manufacturing function may correspond to one of the followings: lead time, obsolescence and lifecycle stage, downtime costs, time to respond to failure, annual consumption value, or carbon emissions indicator. The one or more objective function(s) may be provided beforehand (*e.g.* before the optimization, *e.g.* during the providing of the inputs), for example by a user (*e.g.* an employee of the company ordering the manufacturing of the provided set of spare parts or an operator of the one or more factories). For example, the user may select the one or more function with a predefined list of objective manufacturing functions.

The value(s) of the objective function(s) may be optimized in the whole range of possible value(s) for the objective function(s). In other words, the optimization optimizes the value(s) of the objective function(s) within the whole range of possible value(s) for the objective function(s). Alternatively, one or more of the objective function(s), may be optimized within a restricted range of their possible value(s) for these objective function(s). In other words, the optimization optimizes the value(s) of these objective function(s) within a restricted range of possible value(s) for the objective function(s).

For that, the determining of the optimal subset may comprise, by a user (*e.g.* an employee of a company ordering the manufacturing of the provided set of spare parts or an operator of the one or more factories), providing one or more target values for the one or more objective manufacturing functions. This means that the user, for each respective one of one or more (*e.g.* all) objective manufacturing function(s), provides one or more target values for the respective objective function. A target value of an objective function may be a maximal allowed value for the objective function, *i.e.* the value of the objective function is to be optimized but only within the range of values lower than the maximal allowed value. Alternatively, a target value of an objective may be a minimal allowed value for the objective function, *i.e.* the value of the objective function is to be optimized but only within the range of values larger than the minimal allowed value. The user may in examples provide, for each respective one of one or more (*e.g.* all) objective manufacturing function(s), a maximal allowed value and a minimal allowed value, thereby constraining the optimization so that the respective objective function is optimized within the range of values lower than the maximal allowed value and larger than the minimal allowed value.

The determining of the optimal subset may comprise several optimizations of the one or more objective manufacturing functions. In this case, before each optimization, the user provides the one or more target values and/or modifies the one or more target values based on a result of a previous optimization. In other words, the determining may comprise the following steps for the optimization:

- providing, by the user, the one or more target values;
- performing, automatically by the computer system, an optimization of the one or more objective manufacturing functions;
- one or more iterations of the steps:

  ∘ modifying, by the user and based on the result of the previous optimization, the one or more target values (*e.g.*

modifying one target value, or several, for example all of them, and/or adding and/or removing target values);
∘ performing, automatically by the computer system, another optimization of the one or more objective manufacturing functions under the constraints and based on the reference set.

The optimization may comprise learning a Multiple Criteria Decision Aiding sorting model. The concept of Multiple Criteria Decision Aiding sorting model is known *per se*. The model is constrained by the 3D printing constraints and thus forms a constrained Multiple Criteria Decision Aiding sorting model. The sorting model comprises parameters which are inferred through the learning. The learning in other words comprises inferring the parameters, this inference being the result of the optimization. The learning is indeed based on the 3D printing constraints, on the one or more objective manufacturing functions, and on the reference set, which means in other words that the learning infers the parameters through the optimization of the objective function(s) under the constraints, the reference set guiding the optimization as previously discussed. The model, *i.e.* once learnt, is configured to take as input an input set of spare parts and to output an optimal subset of spare parts, *i.e.* an optimal spare parts portfolio. In other words, since the model's parameters are learnt/inferred through the optimization, the model, once learnt, takes as input any set of spare parts, for example the set of spare parts provided as input to the method, an outputs an optimal subset of the input set, *i.e.* a subset that optimizes or at least tends to optimize the objective manufacturing function(s), while being compatible with the 3D printing constraints and consistent with the reference set.

The reference set may form a learning set of the model, which is data that the parameters must match when updated. In other words, the learning may comprise inferring the parameters from the reference set so that the inferred parameters are consistent with the reference set. It may be in other words said that the learning extends the reference set, since ultimately the learned model (*i.e.* the model with its parameter inferred) takes as input any input set of spare parts and outputs an optimal (*i.e.* with respect to the objective function(s) and under the 3D printing constraints) subset that is consistent with the provided reference set (*i.e.* the compatibility of the spare parts in the optimal subset with the 3D constraints is consistent with the compatibility classification provided by the reference set). In yet other words, the learning of the model takes as input a set of assignment examples (*i.e.* the reference set), and computes a sorting model that is consistent with this preference data. In yet other words, the learning learns the model parameters that match (*e.g.* perfectly) the assignment examples.

The model may include a Non-compensatory Sorting model, also referred to as "NCS" model. The learning of the model may thus include learning the NCS model. The NCS model is learnt to take as input a set of spare parts and to classify each part as compatible with the 3D printing constraints or as non-compatible with the 3D printing constraints. In other words, the NCS model outputs the set of spare parts with for each spare part a classification of the spare part as compatible with the 3D printing constraints or as non-compatible with the 3D printing constraints. The learning of the NCS model may comprise inferring the parameters of the NCS model based on the 3D printing constraints and using the reference set, so that the NCS model parameters are such that the NCS model extends the reference set as previously discussed. For example, the learning may search for parameters of the NCS model that best match the reference set. The reference set may thus form a learning set of the NCS model. In other words, the output of the model is consistent with the reference set.

Learning a NCS model allows to consider interactions between the 3D printing constraints, which may be dependent from each other as previously discussed, and allows to account for the alternative evaluations in an ordinal perspective, thereby avoiding compensation and enabling to deal meaningfully with the constraints. The concept of NCS model is known and discussed in references Bouyssou, D., Marchant, T., "An axiomatic approach to noncompensatory sorting methods in MCDM, I: the case of two categories", European Journal of Operational Research 178(1), 217-245 (2007), and Bouyssou, D., Marchant, T., "An axiomatic approach to noncompensatory sorting methods in MCDM, II: more than two categories", European Journal of Operational Research 178(1), 246-276 (2007). NCS originates from the Electre TRI method discussed in reference Yu, W., "Aide multicritère à la decision dans le cadre de la problématique du tri: méthodes et applications", Ph.D. thesis, LAMSADE, Université Paris Dauphine, Paris (1992).

The NCS model may be formulated as follows.

An alternative is assigned to a category if:

- it is better than the lower limit of the category on a sufficiently strong subset of criteria, and
- this is not the case when comparing the alternative to the upper limit of the category.

Given a set of spare parts $A$, each part $a \in A$ is evaluated according to a finite set of criteria $N$ with $n = |N|$, let $(a_1, a_2, ..., a_n)$ be the evaluation vector of $a \in A$ with $a_i$ denoting its evaluation on criterion i. Without loss of generality, it may be assumed that the preference on each criterion increases with the evaluation. Considering a set of predefined and ordered categories $C^1 < \cdots < C^p$, multiple criteria sorting aims at assigning alternatives to one and only one category.

The assignment rule of the Non-Compensatory Sorting operates on two types of parameters:

- Limiting profiles ($b_1, ..., b_n$).
- Set of sufficient coalitions of criteria $T$ required to be an upset of the power set of the criteria.

The case involving two categories *Good* $\prec$ *Bad* is considered. The category *Good* is herein synonym to "compatible with the 3D printing constraints" whereas the category *Bad* is herein synonym to "non-compatible with the 3D printing constraints. An alternative is considered as *Good* if, and only if, it is better than the limiting profile b according to a sufficient coalition of criteria:

$$\forall a \in A, \quad a \in Good \quad \Leftrightarrow \quad \{i \in N: a_i \geq b_i\} \in T.$$

As previously discussed, the method may consider a learning paradigm in which a set of reference parts assignments (*i.e.* the learning set) is provided by a user. The learning then aims at extending this learning set using the NCS model. Thereby the reference set may be a learning set of the NCS model. To do so, the learning searches for the NCS parameters that best match the learning set. The reference parts assignments may be collected explicitly or implicitly. Explicitly, means that the user is asked to classify a subset of parts in *Good* and *Bad* categories, and this set will constitute the learning set. Implicitly means that a history of examples is considered for which previous decisions have been taken and validated by the user. Consequently, this history will constitute the learning set.

The model may further comprise an evaluation model learnt configured to take as input a set of spare parts outputted by the NCS model, *i.e.* each classified as compatible with the 3D printing constraints or as non-compatible with the 3D printing constraints, and to output a subset of spare part of this input set that is (or at least tends to be) optimal with respect to the one or more manufacturing objective functions. The learning may thus comprise learning the evaluation model's parameters by optimizing the one or more objective functions on the output of the NCS model.

The learning of the model may comprise learning simultaneously the NCS model, which classifies individual parts of a portfolio (*i.e.* a spare parts subset of the provided spare parts set) as compatible or not compatible with the constraints, and the evaluation model, which optimizes the one or more manufacturing objective functions on the outputs of the NCS model. By "learning simultaneously", it is meant that the learning infers the parameters of the whole sorting model, and thus of both the NCS model and of the evaluation model, in a same learning process, by optimizing the one or more objective functions under the 3D printing constraints and using the reference set. The simultaneous learning may for example infer the model parameter by solving a minmax optimization problem for optimizing the objective function(s) under the constraints. This simultaneous learning infers both the parameters of the NCS model so that the NCS model classifies spare parts in accordance with the reference set and the 3D printing constraints, and the parameters of the evaluation model so that the evaluation model optimizes the one or more objective functions on outputs of the NCS model, *i.e.* under the constraints and based on the reference set. This integration of the NCS model learning and of the evaluation model learning in a same optimization allows reducing the number of possible optimal portfolios, which reduces computation times, and ensures that a compromise between the preference set and the objective function(s) is reached.

For that, the learning of the model may comprises encoding learning clauses based on the 3D printing constraints and on the one or more objective manufacturing functions, the encoding using a SAT-based encoding. Using the SAT-based encoring improves efficiency of the learning (*i.e.* reduces learning time). SAT-based encoding is known *per se,* and for example discussed in reference, Belahcene, K., Labreuche, C., Maudet, N., Mousseau, V., Ouerdane, W., "An efficient SAT formulation for learning multiple criteria non-compensatory sorting rules from examples", Computers & Operations Research 97, 58-71 (2018). Mathematical Programming 1, 366-375 (1971). The encoding may comprise formulating the learning clauses by using a SAT formulation or a MaxSAT formulation, as known *per se* from SAT-based encoding.

By "encoding learning clauses based on the 3D printing constraints and on the one or more objective manufacturing functions", the following is meant. The optimization solves, or at least attempts to solve, an optimization problem (*e.g.* a minmax problem) which consists in optimizing the value(s) of the one or more objective manufacturing functions under the constraints. The encoding of the learning clauses thereby consists in formulating, with a SAT formulation or MaxSAT formulation, learning clauses encoding the optimization problem and the constraints.

Examples of the learning where learning clauses are encoded using a SAT-based encoding are now discussed.

In these examples, taking into account technical and portfolio constraints (*i.e.* mechanical and/or 3D printing constraints for individual spare parts and 3D printing capacity constraints for the factories) when evaluating spare parts for the optimization uses the learning of a constrained NCS model that will distinguish between *Good* parts and *Bad* ones respecting considered constraints. The learning in these examples comprises encoding these constraints into SAT language and integrate them into the SAT learning formulation initially proposed in reference Belahcene, K., Labreuche, C., Maudet, N., Mousseau, V., Ouerdane, W., "An efficient SAT formulation for learning multiple criteria non-compensatory sorting rules from examples", Computers & Operations Research 97, 58-71 (2018).

The encoding comprises first defining the binary variables $x_k$, $k \in A$, so that $x_k$ equals 1 if and only if $k$ is assigned to the category *Compatible* by the learned NCS model. Technical and portfolio constraints operate on the x variables, these variables are expressed in the learning formulation by defining additional clauses called the "assignment clauses". For this, the encoding comprises reusing the variables $a_{ik}$ and $t_B$ defined in previously-cited reference Belahcene, K., Labreuche, C., Maudet, N., Mousseau, V., Ouerdane, W., "An efficient SAT formulation for learning multiple criteria non-compensatory sorting rules from examples", Computers & Operations Research 97, 58-71 (2018) and defining a new auxiliary variable $y_{k,B}$, $\forall k \, E \, A$, $\forall B \subseteq N$ as follows:

- "a" variables, indexed by a criterion $i \in N$ and a spare part $k \in A$, represent the approved sets with the following semantic: $a_{i,k} = 1 \Leftrightarrow k_i \geq b_i$ i.e. $k$ is approved according to $i$;
- "t" variables, indexed by a collation of criteria $B \subseteq N$ represent the sufficient coalitions $T$, with the following semantic: $t_B = 1 \Leftrightarrow B \in T$ i.e. the coalition $B$ is sufficient;
- "y" variables, indexed by a reference spare part $k \in A$ and a collation of criteria $B \subseteq N$ represent the set of minimal coalitions that approve the spare parts with the following semantic: $y_{k,B} = 1$ if and only if the minimal coalition that approves $k$ is $B$. Assignment clauses are given by the following formulation:

$$\varphi^{Asgmt} = \varphi_1^{Asgmt} \wedge \varphi_2^{Asgmt} \wedge \varphi_3^{Asgmt} \wedge \varphi_4^{Asgmt} \wedge \varphi_5^{Asgmt}$$

$$\varphi_1^{Asgmt} = \bigwedge_{k \in X, B \subseteq N} \bigwedge_{i \in B} \left( a_{i,k} \vee \neg y_{B,k} \right)$$

$$\varphi_2^{Asgmt} = \bigwedge_{k \in X, B \subseteq N} \bigwedge_{i \notin B} \left( \neg a_{i,k} \vee \neg y_{B,k} \right)$$

$$\varphi_3^{Asgmt} = \bigwedge_{k \in X} \bigwedge_{B \subseteq N} \left( \bigvee_{i \in B} \neg a_{i,k} \vee \bigvee_{i \notin B} a_{i,k} \vee y_{B,k} \right)$$

$$\varphi_4^{Asgmt} = \bigwedge_{k \in X} \bigwedge_{B \subseteq N} \left( t_B \vee \neg y_{B,k} \vee \neg x_k \right)$$

$$\varphi_5^{Asgmt} = \bigwedge_{k \in X} \bigwedge_{B \subseteq N} \left( \neg t_B \vee \neg y_{B,k} \vee x_k \right)$$

The encoding according to the currently-discussed examples comprises introducing the technical constraints in the SAT problem by setting to 0 variables $x_k$ where part k does not meet at least one technical constraint. Setting a binary variable $x_k$ to 0 is equivalent to adding the unit hard clause: $\neg x_k$

The encoding according to the currently-discussed examples comprises defining each portfolio constraint as a pseudo-Boolean constraint where each variable $x_k$, $\forall k \in A$ is weighted by an integer $w_k$. Hence, the encoding considers constraints of the form $\Sigma_{k \in A} w_k \cdot x_k \leq \sigma$. where $w_i$ represents the execution time and $\sigma$ represents the maximum capacity of the AM tools. SAT encoding of such type of constraints results in a set of clauses in the conjunctive normal form, which operates on additional binary variables. The encoding according to the currently-discussed relies on the weighted sequential counter discussed in reference Holldobler, S., Manthey, N., Steinke, P., "A compact encoding of pseudo-boolean constraints" into SAT", in: Glimm, B., Kruger, A. (eds.) KI 2012, "Advances in Artificial Intelligence. pp." 107-118, Springer Berlin Heidelberg (2012), to formulate these constraints.

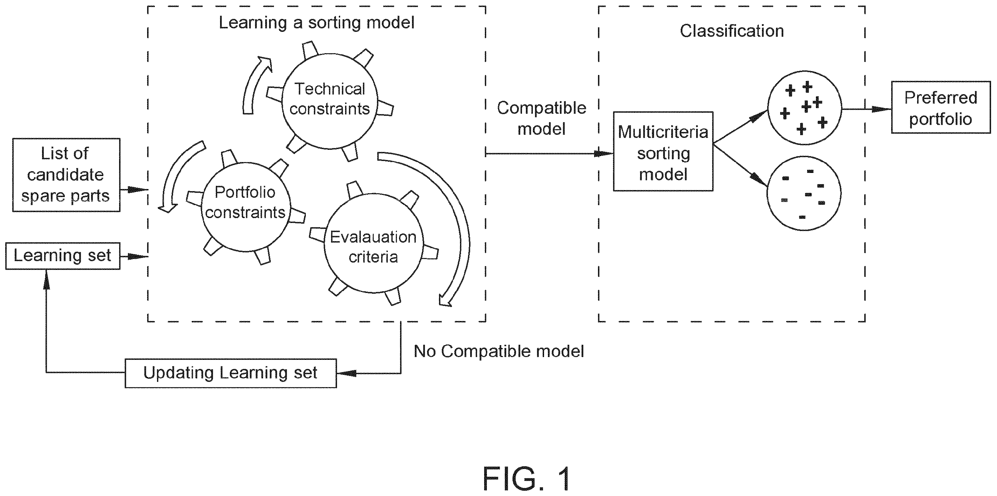

FIG. 1 illustrates schematically the learning pattern to infer a constrained NCS model from the reference/learning set provided by the user. The learning formulation returns the parameters of a compatible NCS model that is configured to classify spare parts candidates into the two categories *Good* and *Bad*. Finally, the preferred portfolio is given by the category *Good*.

As previously discussed, for learning the evaluation model, the method optimizes the spare parts (i.e. searches for the optimal subset) under the 3D printing constraints, which involves that the optimization evaluates the spare parts on the 3D printing constraints and evaluates the objective function(s) for candidate subsets of spare parts. The objective function(s) may also be referred to as "attributes". This may be referred to as "portfolio evaluation problem" for spare parts portfolios which each are compatible with the 3D printing constraints. The portfolio evaluation problem is formulated learns the evaluation model (*i.e.* infers its parameters) in the currently-discussed examples as a multi-objective optimization problem with the objective of minimizing or maximizing (*i.e.* depending on the attribute/objective function nature) the portfolio value on all attributes. In these examples, the objective functions are additive and the optimization comprises, as previously discussed, several optimizations each preceded by a user selection or setting of target values for the objective functions. In other words, an interactive approach to obtain the optimal portfolio is considered in these examples. In yet other words, the interactive procedure in these examples involves a user who seeks to find the optimal portfolio, and a computer system that supports the user in finding that portfolio.

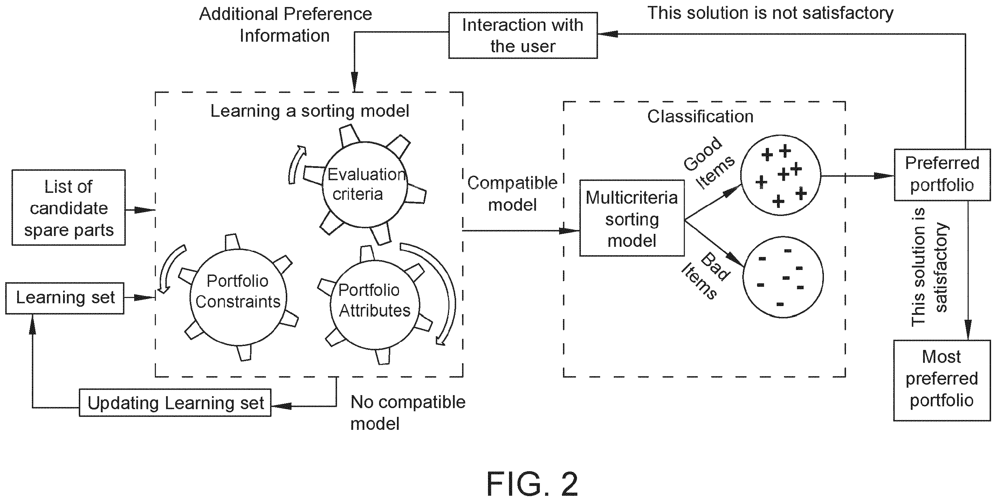

FIG. 2 illustrates the interactive procedure.

The interactive procedure in these examples is an iterative algorithm where the phase of preferences elicitation/learning, and solution generations alternate until the user is satisfied by the current solution. These examples implement the following resolution process in which the system and the user interact after each iteration complete execution:

1. Generate a starting portfolio;
2. Ask for preference information from the user. In this stage, the procedure distinguishes between static preferences which are the learning set and the non-static preferences updated in each iteration. Non-static preferences are the target values which guide the resolution process toward the most preferred portfolio;
3. Generate a new preferred portfolio using the information previously obtained;
4. If the DM is satisfied with the generated portfolio, stop the process, otherwise go back to step (2).

More precisely, the implementation of the interactive procedure to handle the multi-attributes spare parts portfolio selection problem in these examples comprises an encoding into SAT/MaxSAT of a search engine given a preference information provided by the user. The user is involved in the selection process at two levels, at the items level in order to provide the learning set used to learn the NCS model, and at the portfolios level by expressing his preferences (*i.e.* the target values) progressively during each iteration to guide the resolution process toward the best portfolio.

The search engine in the currently-discussed examples is the conjunction of two components:

- The different clauses for learning a constrained NCS model discussed previously.
- A portfolio generator represented by a scalarization function (a function that transforms a multi-objective problem into a single objective) and additional constraints that guide the resolution process according to the user's preferences.

More precisely, these examples use the STEP method discussed in reference Benayoun, R., Montgolfier, J., Tergny, J., Laritchev, O., "Linear programming with multiple objective functions: Step method (STEM)", Mathematical Programming 1, 366-375 (1971). The STEP method is based on the comparison of objective functions, for the portfolio generator. The choice of the interactive method is essentially based on the SAT/MaxSAT language specifications. Indeed, the ultimate goal is to express the associated portfolio generator by logical clauses and binary variables.

The STEP method used in the currently-discussed examples and how to integrate its associated portfolio generator in the interaction procedure are now discussed.

Let $(f_1, f_2, \ldots, f_p)$ be the objective manufacturing function(s)/attribute(s). Without loss of generality, it is assumed in these examples that the preference on each attribute increases with the evaluation (the greater, the better). Let $z^* = \left(z_1^*, z_2^*, \ldots, z_p^*\right)$ be the ideal objective vector. In the STEP method (STEM), the user classifies the attributes at each iteration h of the interactive process into those that have acceptable values $I^{\leq}$ and those whose values are too low, that is, attributes that have unacceptable values $I^{>}$. Then the user may give up a little of the value of some acceptable attributes in order to improve the values of some unacceptable attributes. In other words, during a given iteration h the user is asked to specify lower bounds $\varepsilon_j^h$, $\forall j \in \{1, \ldots, p\}$ such as $f_j \in I^{\leq}$ and consequently the feasible region is restricted according to the user's preferences.

The portfolio generator associated to the STEP method at the iteration h is given by the following minmax optimization problem:

$$\min_{X} \max_{j=1,\ldots,p} \left| \frac{e_j}{\sum_{m=1}^{p} e_m} \left(f_j(x) - z_j^*\right) \right|$$

$$st: f_j(x) \geq \varepsilon_j^h, \forall j \in \{1, \dots, p\}: f_j \in I^{\leq}$$

$$f_j(x) \geq f_j(x^{h-1}), \forall j \in \{1, \dots, p\}: f_j \in I^{>}$$

where $x^{h-1}$ is the decision vector associated to the portfolio generated at the iteration $h$ - 1. The weights of the attributes with acceptable values are set equal to zero while other weights are computed with the pay-off table presented in previously-cited reference Benayoun, R., Montgolfier, J., Tergny, J., Laritchev, O., "Linear programming with multiple objective functions: Step method (STEM)", Mathematical Programming 1, 366-375 (1971).

The minmax optimization problem consisting of a scalarization function and a set of linear constraints, called therefore the research guide constraints, is used to generate a portfolio that meets the user's preferences. The STEP method is used within the resolution process presented above which continues until the user does not want to change the current portfolio. To initialize the resolution process, a starting portfolio may be obtained using the same portfolio generator without considering the research guide constraints.

The currently-discussed examples use a SAT/MaxSAT encoding of the portfolio generator associated with the STEP method.

The attributes in these examples are additive attributes with integer performances. The performance of the $i^{th}$ spare part on the $j^{th}$ attribute $f_j$ is denoted $v_i^j$, where $f_j(x) = \sum_{i=1}^n v_i^j . x_i$. Thus, the scalarization function of the minmax problem is expressed as follows:

$$\min_X \max_{j=1,\dots,p} \left| \frac{e_j}{\sum_{m=1}^p e_m} \left( \sum_{i=1}^n v_i^j . x_i - z_j^* \right) \right|$$

The SAT/MaxSAT encoding of the scalarization function requires the difference between each attribute $f_j$ and the corresponding ideal value $z_j^*$ to be associated with a unitary weight. By defining $x_l^j$, $l \in \{1, \dots, \overline{F}^j\}$ with $\overline{F}^j = \sum_{i=1}^n \alpha \frac{e_j}{\sum_{m=1}^p e_m} . v_i^j$ and $Z_j^* = \alpha . \frac{e_j}{\sum_{m=1}^p e_m} . z_j^*$, $\forall j \in \{1, \dots, p\}$, the minmax problem is expressed as follows:

$$\min_X \max_{j=1,\dots,p} \left| \sum_{l=1}^{\overline{F}^j} x_j^j - Z_j^* \right|$$

$\alpha$ is chosen so that $\alpha . \frac{e_j}{\sum_{m=1}^p e_m}$, $\forall j \in \{1, \dots, p\}$ are integers. Let $\overline{F} = \max_{j=1,\dots,p} \overline{F}^j$, the minmax problem can be linearized by defining $y$ such that $\sum_{l=1}^{\overline{F}} y_l \geq \max_{j=1,\dots,p} \left| \sum_{l=1}^{\overline{F}^j} x_l^j - Z_j^* \right|$ :

$$\min_Y \sum_{i=1}^{\overline{F}} y_i$$

$$st: \sum_{l=1}^{\overline{F}^j} x_l^j - \sum_{l=1}^{\overline{F}} y_l \leq Z_j^*, \forall j \in \{1, \dots, p\}$$

$$\sum_{l=1}^{\overline{F}^j} x_l^j + \sum_{l=1}^{\overline{F}} y_i \geq Z_j^*, \forall j \in \{1, \dots, p\}$$

The SAT/MaxSAT encoding of the resulting problem is given by the following formulation:

$$\varphi_1^{Stem} = \bigwedge_{l=1}^{\bar{F}} \neg y_l$$

$$\varphi_2^{Stem} = \bigwedge_{j=1}^{p} \bigwedge_{l=1}^{\bar{F}^j} \left(\neg x_l^j \vee R_{l,1}^{j,1}\right)$$

$$\varphi_3^{Stem} = \bigwedge_{j=1}^{p} \bigwedge_{l=\bar{F}^j+1}^{\bar{F}^j+\bar{F}-1} \left(y_{l-\bar{F}^j} \vee R_{l,1}^{j,1}\right)$$

$$\varphi_4^{Stem} = \bigwedge_{j=1}^{p} \bigwedge_{k=2}^{Z_j^*+\bar{F}} \left(\neg R_{1,k}^{j,1}\right)$$

$$\varphi_5^{Stem} = \bigwedge_{j=1}^{p} \bigwedge_{l=2}^{\bar{F}^j+\bar{F}-1} \bigwedge_{k=1}^{Z_j^*+\bar{F}} \left(\neg R_{l-1,k}^{j,1} \vee R_{l,k}^{j,1}\right)$$

$$\varphi_6^{Stem} = \bigwedge_{j=1}^{p} \bigwedge_{l=2}^{\bar{F}^j} \bigwedge_{k=2}^{Z_j^*+\bar{F}} \left(\neg x_l^j \vee \neg R_{l-1,k-1}^{j,1} \vee R_{l,k}^{j,1}\right)$$

$$\varphi_7^{Stem} = \bigwedge_{j=1}^{p} \bigwedge_{l=\bar{F}^j+1}^{\bar{F}^j+\bar{F}-1} \bigwedge_{k=2}^{Z_j^*+\bar{F}} \left(\neg y_{l-\bar{F}^j} \vee \neg R_{l-1,k-1}^{j,1} \vee R_{l,k}^{j,1}\right)$$

$$\varphi_8^{Stem} = \bigwedge_{j=1}^{p} \bigwedge_{l=2}^{\bar{F}^j} \left(\neg x_l^j \vee R_{l-1,Z_j^*+\bar{F}}^{j,1}\right)$$

$$\varphi_9^{Stem} = \bigwedge_{j=1}^{p} \bigwedge_{l=\bar{F}^j+1}^{\bar{F}^j+\bar{F}} \left(\neg y_{l-\bar{F}^j} \vee R_{l-1,Z_j^*+\bar{F}}^{j,1}\right)$$

$$\varphi_{10}^{Stem} = \bigwedge_{j=1}^{p} \bigwedge_{l=1}^{\bar{F}^j} \left(x_l^j \vee R_{l,1}^{j,2}\right)$$

$$\varphi_{11}^{Stem} = \bigwedge_{j=1}^{p} \bigwedge_{l=\bar{F}^j+1}^{\bar{F}^j+\bar{F}-1} \left(y_{l-\bar{F}^j} \vee R_{l,1}^{j,2}\right)$$

$$\varphi_{12}^{Stem} = \bigwedge_{j=1}^{p} \bigwedge_{k=2}^{-Z_j^*+\bar{F}^j+\bar{F}} \left(\neg R_{1,k}^{j,2}\right)$$

$$\varphi_{13}^{Stem} = \bigwedge_{j=1}^{p} \bigwedge_{l=2}^{\bar{F}^j+\bar{F}-1} \bigwedge_{k=1}^{-Z_j^*+\bar{F}^j+\bar{F}} \left(\neg R_{l-1,k}^{j,2} \vee R_{l,k}^{j,2}\right)$$

$$\varphi_{14}^{Stem} = \bigwedge_{j=1}^{p} \bigwedge_{l=2}^{\bar{F}^j} \bigwedge_{k=2}^{-Z_j^*+\bar{F}^j+\bar{F}} \left(x_l^j \vee \neg R_{l-1,k-1}^{j,2} \vee R_{l,k}^{j,2}\right)$$

$$\varphi_{15}^{Stem} = \bigwedge_{j=1}^{p} \bigwedge_{l=\bar{F}^j+1}^{\bar{F}^j+\bar{F}-1} \bigwedge_{k=2}^{-Z_j^*+\bar{F}^j+\bar{F}} \left(y_{l-\bar{F}^j} \vee \neg R_{l-1,k-1}^{j,2} \vee R_{l,k}^{j,2}\right)$$

$$\varphi_{16}^{Stem} = \bigwedge_{j=1}^{p} \bigwedge_{l=2}^{\bar{F}^j} \left(x_l^j \vee R_{l-1,-Z_j^*+\bar{F}^j+\bar{F}}^{j,2}\right)$$

$$\varphi_{17}^{Stem} = \bigwedge_{j=1}^{p} \bigwedge_{l=\bar{F}^j+1}^{\bar{F}^j+\bar{F}} \left(y_{l-\bar{F}^j} \vee R_{l,-Z_j^*+\bar{F}^j+\bar{F}}^{j,2}\right)$$

- *"R"* are supplementary variables, introduced in the MaxSAT formulation in order to encode cardinality constraints into SAT clauses.

The SAT/MaxSAT encoding of the portfolio generator of the STEP method is given by the formulation:

$$\varphi^{Stem} = \bigwedge_{i=1}^{17} \varphi_i^{Stem}$$

- Soft clauses $\varphi_1^{Stem}$ are associated with a unit weight.
- Hard clauses $\langle \varphi_i^{Stem} \rangle_{i \in \{2,\dots,17\}}$ are associated with maximal weight.

As discussed previously, attributes $(f_1, f_2, \dots, f_p)$ are supposed to be additive such that $f_j(x) = \sum_{i=1}^{n} v_i^j . x_i$, $\forall j \in \{1, \dots, p\}$. Research guide constraints of the portfolio generator are expressed as follows:

$$\begin{cases} \sum_{i=1}^{n} v_i^j . x_i \geq \varepsilon_j^h, \forall j \in \{1, \dots, p\}: f_j \in I^{\leq} \\ \sum_{i=1}^{n} v_i^j . x_i \geq f_j(x^{h-1}), \forall j \in \{1, \dots, p\}: f_j \in I^{>} \end{cases}$$

Both constraints can be translated into SAT language using the weighted sequential counter encoding discussed in reference Holldobler, S., Manthey, N., Steinke, P., "A compact encoding of pseudo-boolean constraints" into SAT. In:

Glimm, B., Kruger, A. (eds.) KI 2012, Advances in Artificial Intelligence. pp. ¨ 107-118. Springer Berlin Heidelberg (2012).

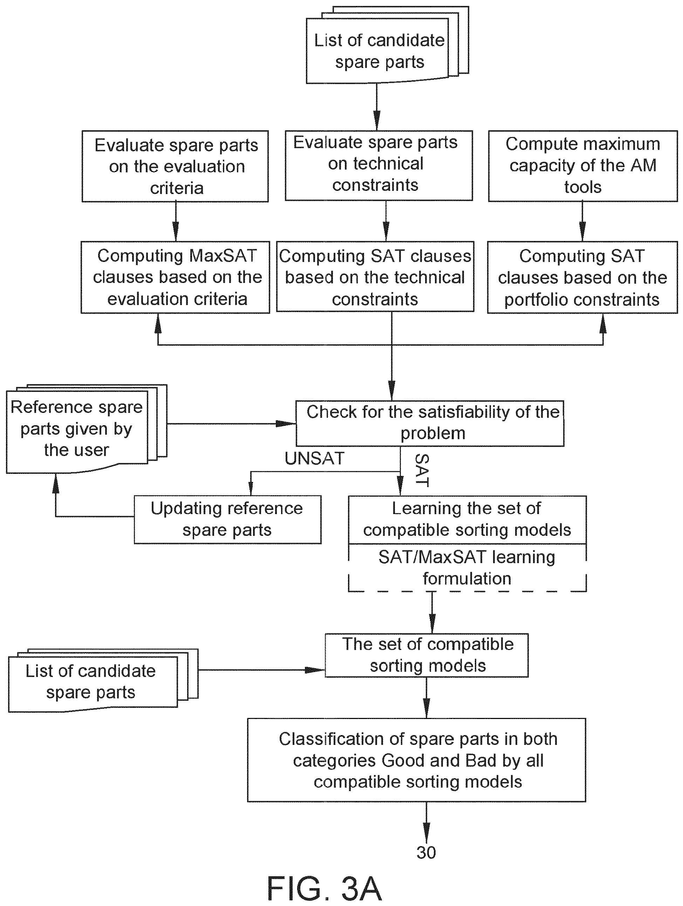

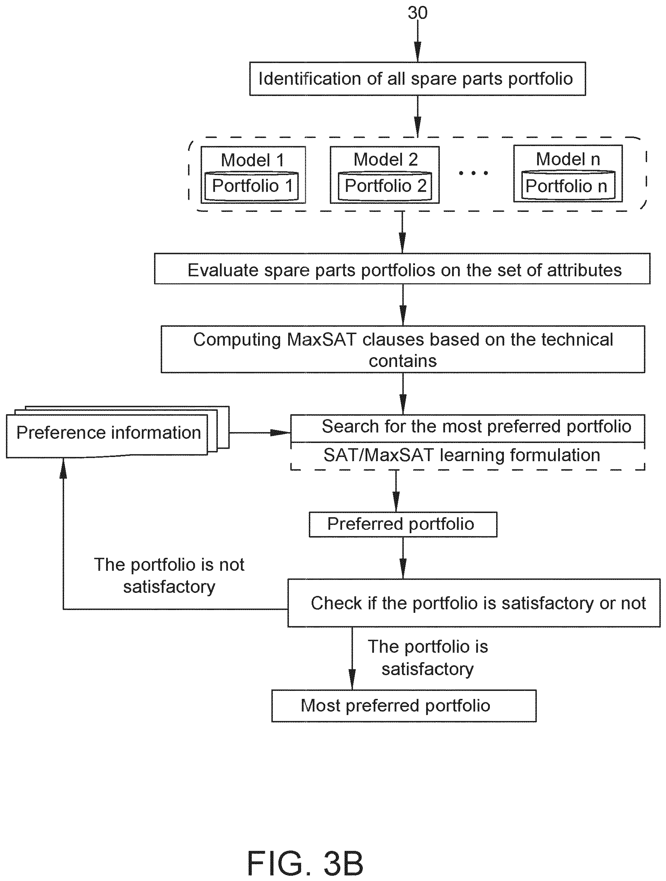

FIG.s 3A-3B show a block diagram illustrating the optimization according to examples of the method. Reference 30 indicates a same arrow in FIG.s 3A-3B (i.e. arrow 30 in FIG. 3A and arrow 30 in FIG. 3B are the same arrow).

An example of application of the method is now discussed.

In this example of application, the method is used in the situation where a car manufacturing company guarantees availability of spare parts for maintaining the cars that they sell. The duration of these service guarantees is usually more than 5 years. The company faces key challenges in guaranteeing availability of spare parts due to unsatisfactory service levels and high cost of low volume spare parts. The company decides to use 3D printing for manufacturing the spare parts to overcome these challenges. The company uses for that an example of the method (i.e. one implementing one of the previously-discussed examples of the learning where learning clauses are encoded using a SAT-based encoding) to select a portfolio of spare parts to be printed with the 3D printers given a limited capacity. The selection is to be made weekly. The company has at the time of the present example a list of 368 ordered spare parts to be manufactured and decides for that to use the method for selecting the optimal portfolio. The steps followed in selecting the spare parts which are most suitable for additive manufacturing are detailed below.

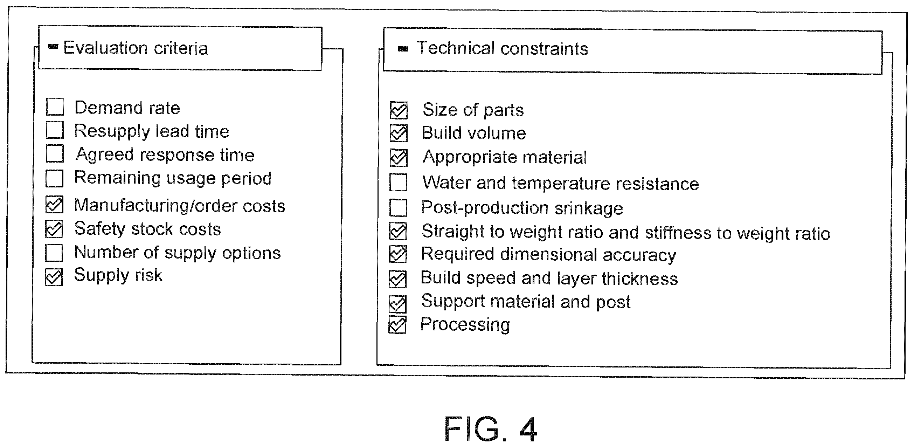

**Step A) 3D constraints selection:** when providing the 3D printing constraints, the user (e.g. an employee of a company ordering the manufacturing of the provided set of spare parts or an operator of the one or more factories) starts by choosing the criteria and technical constraints, which will be used to evaluate the spare parts individually. Here, three criteria and eight constraints are selected. FIG. 4 shows a screenshot illustrating an example of constraints and criteria selection where the user selects the constraints and criteria among a predefined list for each. The selection is here graphical, the user selecting an unchecked checkbox associated with a constraint/criteria for selecting it.

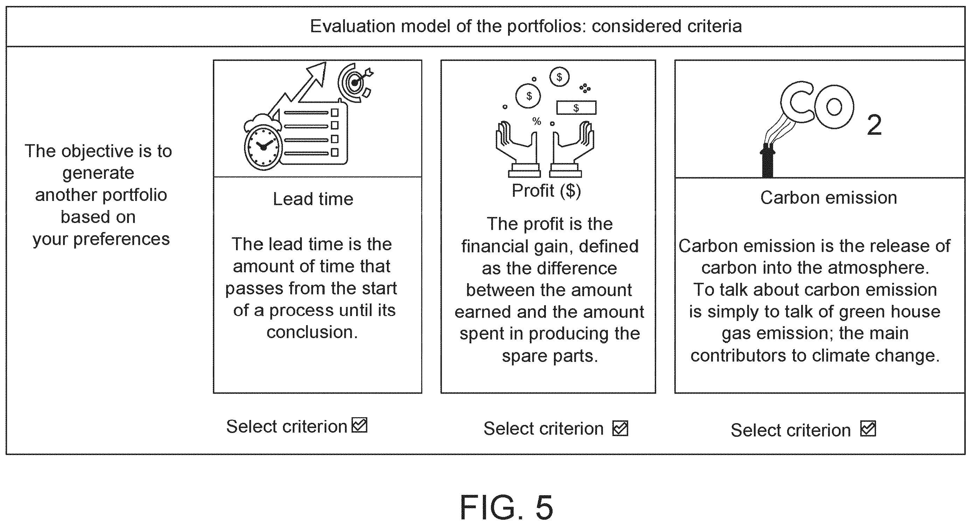

**Step B) Objective manufacturing function(s) selection:** serves to distinguish between compatible portfolios and guide research towards the most preferred one. Here, the user choses among three objective manufacturing functions :lead time (i.e. amount of time that passes from the start of a process to its conclusion), profit (*i.e.* financial gain defined as the difference between the amount earned and the amount spent in producing the spare parts, given manufacturing considerations (*e.g.* available machines, power and resources)) and carbon emissions (release of carbon into the atmosphere). FIG. 5 shows a screenshot illustrating an example of objective manufacturing function selection where the user selects the objective function(s) among a predefined list. The selection is here graphical, the user selecting an unchecked checkbox associated with a function for selecting it.

**Step C) Providing a performance table:** the method may comprise providing a performance table, which groups together the evaluations of each spare part of the provided set according to the 3D printing constraints, and objective manufacturing functions, to which is added supplementary information on the parts such as the family, the resource requirements and the quantity ordered of each part. Evaluation criteria "Manufacturing/ order costs", "Safety stock costs" and "Supply risk" are evaluated on five points ordinal scale, and the scales are defined in a such way that a less value corresponds to a better evaluation. These values are decided by the user. According to the 3D printing technology characteristics, technical constraints may be natively filled, and finally, portfolio criteria *i.e.* "Lead Time", "Profit" and "Carbon emissions" may be estimated from a simple execution of the printing process. FIG.s 6A-6B show a screenshot of the performance table being displayed to the user.

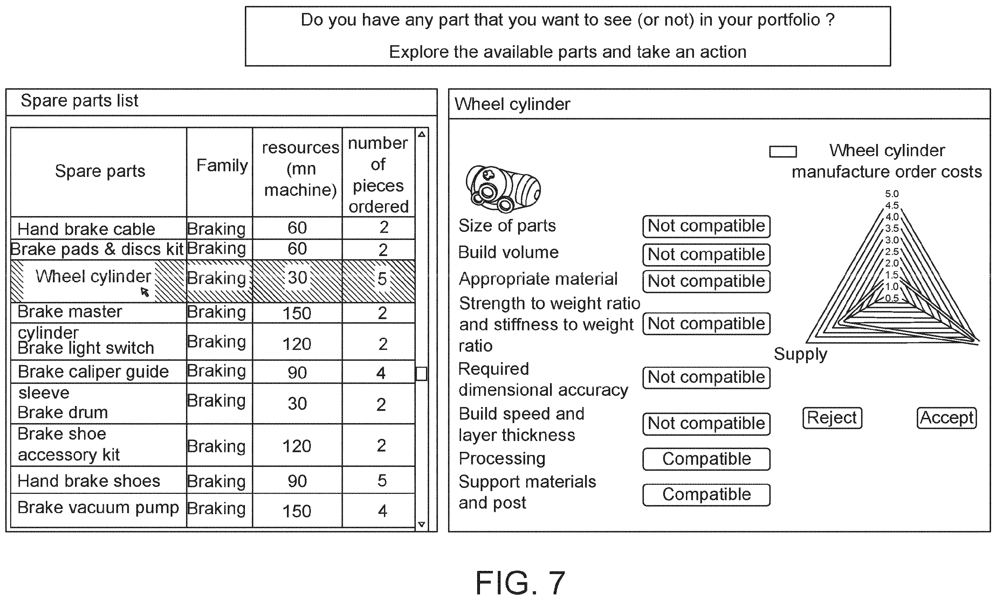

**Step D) Learning and first optimization:** This steps learns the model on the provided spare parts. As was discussed previously, the final recommendation is the result of the (*e.g.* simultaneous) learning of two evaluation models: the NCS model to evaluate the spare parts individually with respect to the 3D printing constraints and the evaluation model that evaluates the portfolios under the 3D constraints. The learning finds the models' parameters by solving a multi-objective optimization problem (*i.e.* optimizing the objective function(s) under the constraints, as previously discussed). The construction of the NCS model involves a learning formulation which takes reference parts (*i.e.* the reference set) as learning set. This step constructs the learning set by asking the user to express his/her preferences on some parts. FIG. 7 shows a screenshot of a widget allowing the user to select the learning set.

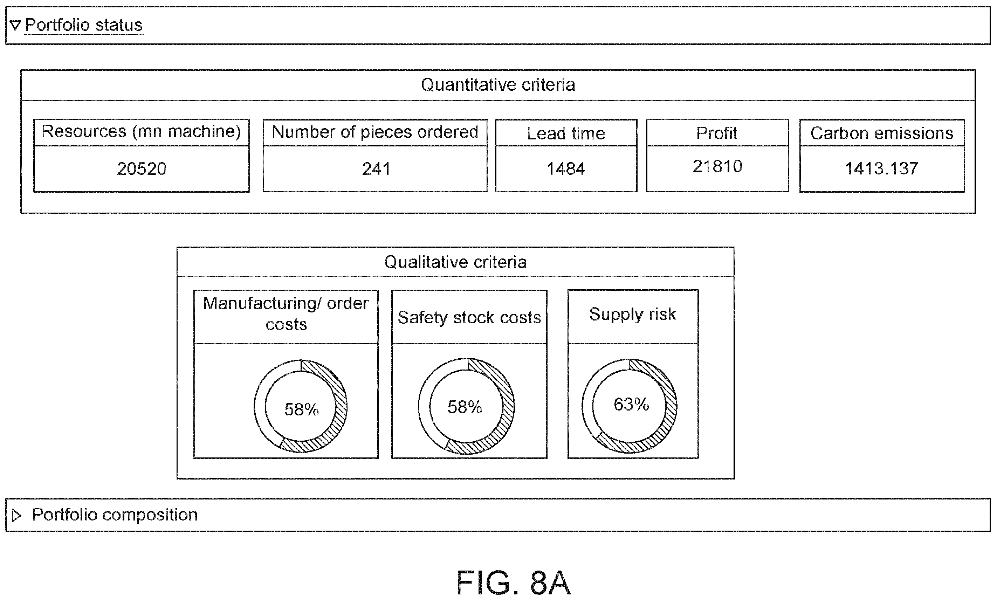

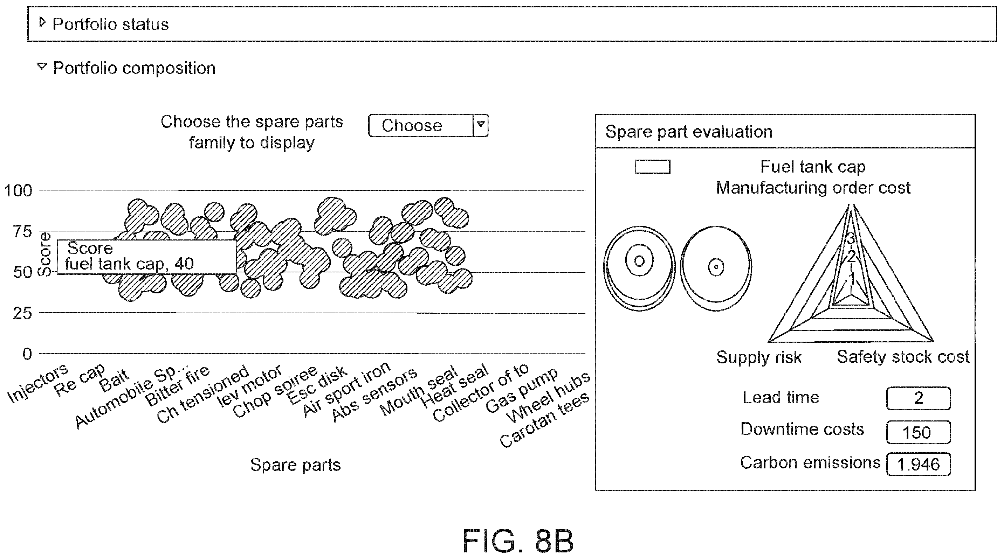

The optimal portfolio is defined as the set of spare parts that optimizes the one or more manufacturing functions and that are evaluated as Good parts according to the learned NCS model. The presently-discussed examples adopts an interactive procedure to generate the most preferred portfolio. First, the procedure starts by generating a first one without involving the user by resolving the minmax optimization problem (*i.e.* for optimizing the objective function(s) under the constraints), and then presents the solution to the user. FIG.s 8A-8B show two screenshots of a widget allowing to display to the user detailed views on the portfolio characteristics. On FIG.s 8A-8B a view of the portfolio's status with respect to the constraints and the objective function(s) (FIG. 8A) and a view of the portfolio's composition are shown (FIG. 8B).

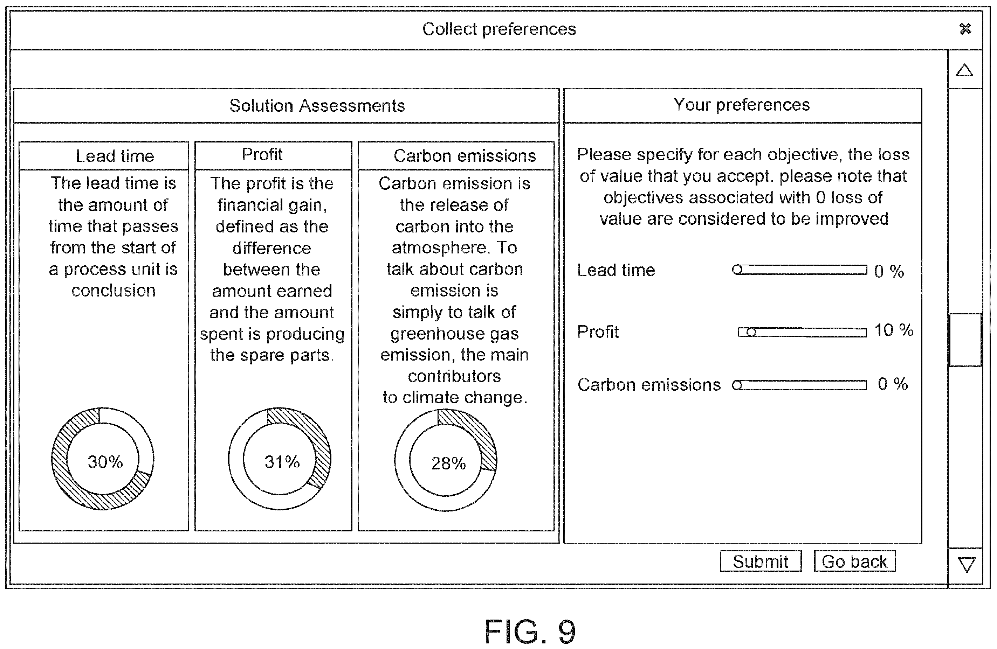

**Step E) Guide the search to the most preferred portfolio:** In the next step, the example of the method comprise one or more interactions with the user to improve the first generated solution, as previously discussed. The user specifies for each objective the accepted losses of value comparing to the initial portfolio values. In the example illustrated by the screenshot shown on FIG. 9, the user accepts the degradation of the profit by 10% and in return, he/she seeks to improve the lead time and the carbon emissions.

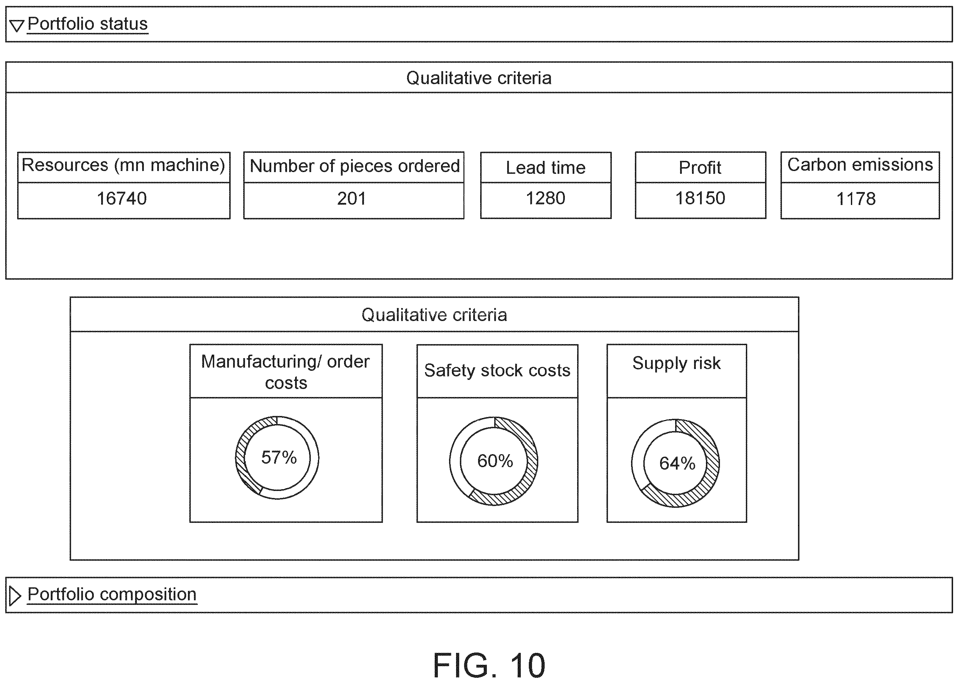

**Step F) New Solution Generation:** Then, a new portfolio is generated according to these preferences by

**EP 4 276 556 B1**

resolving an optimization problem that is constituted by the minmax of both Lead Time and Carbon emissions objectives, under the constraint that ensures a maximum loss of value of 10% according to the profit objective. In this step, two situations may occur, if the solution is not satisfactory, in such case steps E) and F) are repeated to generate another solution. Otherwise, the interactive procedure is stopped and the current solution is considered as the most preferred. FIG. 10 shows a screenshot of the new solution's status.

An application of the method for 3D printing planning of car spare parts has been discussed. The method may be applied to other cases. For example, the method may be applied for 3D printing planning of spare parts for replacing machine parts in manufacturing lines, *i.e.* for performing maintenance of machine in manufacturing lines. In this case, 3D printing is a technology that tends to increasingly be used by practitioners, for the reasons previously explained and also because there is a need to replace quickly the machine parts that need to be replaced by spare parts. Maintenance is indeed a task that is to be performed relatively fast, since the manufacturing lines must not be stopped for long durations. Thus there is a need to manufacture the machine spare parts with 3D printing, which guaranties a certain manufacturing speed. Yet, as previously discussed, 3D printing of all the parts is not practically feasible, and the method provides an objective and optimal prioritization of which spare parts are to be manufactured by 3D printing.

A method for 3D printing planning has been discussed in detail, for determining an optimal set of spare parts to be 3D printed. It is to be understood that the initial set of spare parts, *i.e.* the provided set of spare parts, may comprise one or more other parts (i.e. one or more parts which are not spare parts) and the optimization may take into account these one or more other parts).

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (*e.g.* one for the program, and possibly one for the database).

FIG. 11 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of

16

the program on the system results in any case in instructions for performing the method.

**Claims**

1. A computer-implemented method for 3D printing planning, comprising:

   - providing:

     ○ a set of spare parts to be manufactured in one or more factories comprising 3D printers and other manufacturing machines;
     ○ 3D printing constraints, the 3D printing constraints including:

       ▪ one or more constraints each representing a 3D printing constraint and/or a mechanical constraint for a spare part; and
       ▪ one or more 3D printing capacity constraints for the one or more factories; and

     ○ a reference set of one or more spare parts each classified either as compatible with the 3D printing constraints or as non-compatible with the 3D printing constraints;

   - determining an optimal subset of the set of spare parts to be 3D printed, the determining including optimizing one or more objective manufacturing functions under the 3D printing constraints and based on the reference set, the optimization comprising learning a Multiple Criteria Decision Aiding sorting model configured to take as input an input set of spare parts and to output an optimal subset of spare parts, the learning being based on the set of spare parts, on the 3D printing constraints, on the one or more objective manufacturing functions, and on the reference set, the one or more manufacturing functions corresponding to lead time and/or carbon footprint; and
   - establishing a 3D printing plan for the one or more factories based on the determined optimal subset.

2. The method of claim 1, wherein the reference set forms a learning set of the model.

3. The method of claim 1 or 2, wherein the model includes a Non-Compensatory Sorting, NCS, model.

4. The method of claim 3, wherein the learning comprises encoding learning clauses based on the 3D printing constraints and on the one or more objective manufacturing functions, the encoding using a SAT-based encoding.

5. The method of any one of claim 1 to 4, wherein the reference set is provided by a user.

6. The method of any one of claims 1 to 5, wherein the determining of the optimal subset comprises a preliminary step of verifying the consistency of the reference set with the 3D printing constraints and modifying the reference set as long as the reference set is inconsistent, by performing, as long as there is no consistency of the reference set with the 3D printing constraints, one or more iterations of:

   - by a user, providing the reference set and/or modifying the reference set previously provided and/or modified at a previous iteration;
   - by the computer system performing the method, checking the consistency of the reference set with the 3D printing constraints by solving the constraints for the reference set.

7. The method of any one of claims 1 to 6, wherein the determining of the optimal subset comprises, by a user, providing one or more target values for the one or more objective manufacturing functions.

8. The method of claim 7, wherein the determining of the optimal subset comprises several optimizations of the one or more objective manufacturing functions, and wherein before each optimization, the user provides the one or more target values and/or modifies the one or more target values based on a result of a previous optimization.

9. The method of any one of claims 1 to 8, wherein the method further comprises the 3D printing of the determined optimal subset in the one or more factories based on the established 3D printing plan.

10. A computer program comprising instructions for performing the method of any one of claims 1 to 9.

**11.** A computer-readable data storage medium having recorded thereon the computer program of claim 10.

**12.** A computer system comprising a processor coupled to a memory, the memory having recorded thereon the computer program of claim 10.

**Patentansprüche**

**1.** Computerimplementiertes Verfahren zum Planen von 3D-Drucken, Folgendes umfassend:

- Bereitstellen

◦ eines Satzes von Ersatzteilen, die in einer oder mehreren Werken hergestellt werden sollen, die 3D-Drucker und andere Herstellungsmaschinen umfassen,
◦ von 3D-Druckbeschränkungen, wobei die 3D-Druckbeschränkungen Folgendes beinhalten:

■ eine oder mehrere Beschränkungen, die jeweils eine 3D-Druckbeschränkung und/oder eine mechanische Beschränkung für ein Ersatzteil darstellen, und
■ eine oder mehrere Beschränkungen der 3D-Druckkapazität für das eine oder die mehreren Werke und

◦ einen Referenzsatz von einem oder mehreren Ersatzteilen, die jeweils entweder als kompatibel mit den 3D-Druckbeschränkungen oder als nicht kompatibel mit den 3D-Druckbeschränkungen klassifiziert sind,

- Bestimmen einer optimalen Teilmenge des Satzes von Ersatzteilen, die in 3D zu drucken sind, wobei das Bestimmen das Optimieren einer oder mehrerer objektiver Herstellungsfunktionen unter den 3D-Druckbeschränkungen und basierend auf dem Referenzsatz beinhaltet, wobei das Optimieren das Einlernen eines Sortierungsmodells der multikriteriellen Entscheidungshilfe umfasst, das dafür konfiguriert ist, als Eingabe einen Eingabesatz von Ersatzteilen zu nehmen und eine optimale Teilmenge von Ersatzteilen auszugeben, wobei das Einlernen auf dem Satz von Ersatzteilen, auf den 3D-Druckbeschränkungen, auf der einen oder den mehreren objektiven Herstellungsfunktionen und auf dem Referenzsatz basiert, wobei die eine oder die mehreren objektiven Herstellungsfunktionen einer Durchlaufzeit und/oder einem Kohlenstofffußabdruck entsprechen,
- Erstellen eines Plans zum 3D-Druck für das eine oder die mehreren Werke basierend auf der bestimmten optimalen Teilmenge.

**2.** Verfahren nach Anspruch 1, wobei der Referenzsatz einen Lernsatz des Modells bildet.

**3.** Verfahren nach Anspruch 1 oder 2, wobei das Modell ein Modell des nicht kompensierenden Sortierens, NCS, ist.

**4.** Verfahren nach Anspruch 3, wobei das Einlernen das Codieren von Lernsätzen basierend auf den 3D-Druckbeschränkungen und auf der einen oder den mehreren objektiven Herstellungsfunktionen umfasst, wobei das Codieren ein SAT-basiertes Codieren verwendet.

**5.** Verfahren nach einem der Ansprüche 1 bis 4, wobei der Referenzsatz von einem Anwender bereitgestellt wird.

**6.** Verfahren nach einem der Ansprüche 1 bis 5, wobei das Bestimmen der optimalen Teilmenge einen Vorbereitungsschritt des Verifizierens der Übereinstimmung des Referenzsatzes mit den 3D-Druckbeschränkungen und das Modifizieren des Referenzsatzes so lange der Referenzsatz nicht übereinstimmt, durch Durchführen einer oder mehrerer Wiederholungen, solange keine Übereinstimmung des Referenzsatzes mit den 3D-Druckbeschränkungen besteht, von Folgendem umfasst:

- Bereitstellen des Referenzsatzes und/oder Modifizieren des zuvor bereitgestellten und/oder in einer vorherigen Wiederholung modifizierten Referenzsatzes durch einen Anwender,
- Prüfen der Übereinstimmung des Referenzsatzes mit den 3D-Druckbeschränkungen durch Lösen der Beschränkungen für den Referenzsatz durch das Computersystem, welches das Verfahren durchführt.

**7.** Verfahren nach einem der Ansprüche 1 bis 6, wobei das Bestimmen der optimalen Teilmenge das Bereitstellen eines oder mehrere Sollwerte für die eine oder die mehreren objektiven Herstellungsfunktionen durch einen Anwender umfasst.

8. Verfahren nach Anspruch 7, wobei das Bestimmen der optimalen Teilmenge mehreren Optimierungen der einen oder der mehreren objektiven Herstellungsfunktionen umfasst und wobei der Anwender vor jeder Optimierung den einen oder die mehreren Sollwerte bereitstellt und/oder den einen oder die mehreren Sollwerte basierend auf einem Ergebnis einer vorherigen Optimierung modifiziert.

9. Verfahren nach einem der Ansprüche 1 bis 8, wobei das Verfahren ferner das 3D-Drucken der bestimmten optimalen Teilmenge in dem einen oder den mehreren Werken basierend auf dem erstellten Plan zum 3D-Druck umfasst.

10. Computerprogramm, das Anweisungen zum Durchführen des Verfahrens einem der Ansprüche 1 bis 9.

11. Computerlesbares Datenspeichermedium, auf dem das Computerprogramm nach Anspruch 10 aufgezeichnet ist.

12. Computersystem, einen Prozessor umfassend, der mit einem Speicher gekoppelt ist, wobei in dem Speicher das Computerprogramm nach Anspruch 10 aufgezeichnet ist.

**Revendications**

1. Procédé de planification d'impression 3D mis en œuvre par ordinateur, comprenant :

- la fourniture de :

• un ensemble de pièces de rechange à fabriquer dans une ou plusieurs usines comprenant des imprimantes 3D et d'autres machines de fabrication ;
• contraintes d'impression 3D, les contraintes d'impression 3D comprenant :

■ une ou plusieurs contraintes représentant chacune une contrainte d'impression 3D et/ou une contrainte mécanique pour une pièce de rechange ; et
■ une ou plusieurs contraintes de capacité d'impression 3D pour les une ou plusieurs usines ; et

• un ensemble de référence d'une ou plusieurs pièces de rechange classées chacune comme étant compatibles avec les contraintes d'impression 3D ou comme étant non compatibles avec les contraintes d'impression 3D ;

- la détermination d'un sous-ensemble optimal de l'ensemble de pièces de rechange à imprimer en 3D, la détermination comprenant l'optimisation d'une ou plusieurs fonctions objectives de fabrication sous les contraintes d'impression 3D et sur la base de l'ensemble de référence, l'optimisation comprenant l'apprentissage d'un modèle de tri d'aide à la décision à critères multiples configuré pour utiliser en tant qu'entrée un ensemble de pièces de rechange d'entrée et pour délivrer en sortie un sous-ensemble de pièces de rechange optimal, l'apprentissage étant basé sur l'ensemble de pièces de rechange, sur les contraintes d'impression 3D, sur les une ou plusieurs fonctions objectives de fabrication, et sur l'ensemble de référence, les une ou plusieurs fonctions de fabrication correspondant à un délai et/ou un bilan carbone ;
- l'établissement d'un plan d'impression 3D pour les une ou plusieurs usines sur la base du sous-ensemble optimal déterminé.

2. Procédé selon la revendication 1, dans lequel l'ensemble de référence forme un ensemble d'apprentissage du modèle.

3. Procédé selon la revendication 1 ou 2, dans lequel le modèle comprend un modèle de tri non compensatoire, NCS.

4. Procédé selon la revendication 3, dans lequel l'apprentissage comprend le codage de clauses d'apprentissage sur la base des contraintes d'impression 3D et des une ou plusieurs fonctions objectives de fabrication, le codage utilisant un codage basé sur SAT.

5. Procédé selon l'une quelconque des revendications 1 à 4, dans lequel l'ensemble de référence est fourni par un utilisateur.

6. Procédé selon l'une quelconque des revendications 1 à 5, dans lequel la détermination du sous-ensemble optimal comprend une étape préliminaire de vérification de la cohérence de l'ensemble de référence avec les contraintes d'impression 3D et la modification de l'ensemble de référence tant que l'ensemble de référence est incohérent, en effectuant, tant qu'il n'y a pas de cohérence de l'ensemble de référence avec les contraintes d'impression 3D, une ou plusieurs itérations de :

   - par un utilisateur, fourniture de l'ensemble de référence et/ou modification de l'ensemble de référence précédemment fourni et/ou modifié à une itération précédente ;
   - par le système informatique, conduite du procédé, vérification de la cohérence de l'ensemble de référence avec les contraintes d'impression 3D par résolution des contraintes pour l'ensemble de référence.

7. Procédé selon l'une quelconque des revendications 1 à 6, dans lequel la détermination du sous-ensemble optimal comprend, par un utilisateur, la fourniture d'une ou plusieurs valeurs cibles pour les une ou plusieurs fonctions objectives de fabrication.

8. Procédé selon la revendication 7, dans lequel la détermination du sous-ensemble optimal comprend plusieurs optimisations des une ou plusieurs fonctions objectives de fabrication, et dans lequel, avant chaque optimisation, l'utilisateur fournit les une ou plusieurs valeurs cibles et/ou modifie les une ou plusieurs valeurs cibles sur la base d'un résultat d'une optimisation précédente.

9. Procédé selon l'une quelconque des revendications 1 à 8, dans lequel le procédé comprend en outre l'impression 3D du sous-ensemble optimal déterminé dans les une ou plusieurs usines sur la base du plan d'impression 3D établi.

10. Programme informatique comprenant des instructions pour réaliser le procédé selon l'une quelconque des revendications 1 à 9.

11. Support de stockage de données lisible par ordinateur comportant, enregistré sur celui-ci, le programme informatique selon la revendication 10.

12. Système informatique comprenant un processeur couplé à une mémoire, la mémoire comportant, enregistré sur celle-ci, le programme informatique selon la revendication 10.

FIG. 1

FIG. 2

List of candidate
spare parts

Evaluate spare parts
on the evaluation
criteria

Evaluate spare parts
on technical
constraints

Compute maximum
capacity of the AM
tools

Computing MaxSAT
clauses based on the
evaluation criteria

Computing SAT clauses
based on the technical
constraints

Computing SAT
clauses based on the
portfolio constraints

Reference spare
parts given by
the user

Check for the satisfiability of the
problem

UNSAT

SAT

Updating reference
spare parts

Learning the set of
compatible sorting models

SAT/MaxSAT learning
formulation

List of candidate
spare parts

The set of compatible
sorting models

Classification of spare parts in both
categories Good and Bad by all
compatible sorting models

30

FIG. 3A

30

Identification of all spare parts portfolio

Model 1
Portfolio 1

Model 2
Portfolio 2

· · ·

Model n
Portfolio n

Evaluate spare parts portfolios on the set of attributes

Computing MaxSAT clauses based on the technical contains

Preference information

Search for the most preferred portfolio

SAT/MaxSAT learning formulation

Preferred portfolio

The portfolio is not satisfactory

Check if the portfolio is satisfactory or not

The portfolio is satisfactory

Most preferred portfolio

FIG. 3B

| ■ Evaluation criteria | ■ Technical constraints |
|---|---|
| ☐ Demand rate<br>☐ Resupply lead time<br>☐ Agreed response time<br>☐ Remaining usage period<br>☑ Manufacturing/order costs<br>☑ Safety stock costs<br>☐ Number of supply options<br>☑ Supply risk | ☑ Size of parts<br>☑ Build volume<br>☑ Appropriate material<br>☐ Water and temperature resistance<br>☐ Post-production srinkage<br>☑ Straight to weight ratio and stiffness to weight ratio<br>☑ Required dimensional accuracy<br>☑ Build speed and layer thickness<br>☑ Support material and post<br>☑ Processing |

FIG. 4

EP 4 276 556 B1

| Evaluation model of the portfolios: considered criteria |
|---|

The objective is to generate another portfolio based on your preferences

**Lead time**

The lead time is the amount of time that passes from the start of a process until its conclusion.

Select criterion ☑

**Profit ($)**

The profit is the financial gain, defined as the difference between the amount earned and the amount spent in producing the spare parts.

Select criterion ☑

**Carbon emission**

Carbon emission is the release of carbon into the atmosphere. To talk about carbon emission is simply to talk of green house gas emission; the main contributors to climate change.

Select criterion ☑

FIG. 5

EP 4 276 556 B1

Spare parts list

| Spare parts | Family | resources (mn machine) | number of pieces ordered | Manufact-uring/ order cost | Safety stock costs | Supply risk | Size of parts | Build volume | Appropriate material |
|---|---|---|---|---|---|---|---|---|---|
| Blinker | Body | 30 | 4 | 1 | 1 | 2 | Compatible | Compatible | Not Compatible |
| Headlights | Body | 60 | 3 | 2 | 1 | 3 | Compatible | Not Compatible | Not Compatible |
| bumper grille | Body | 90 | 6 | 6 | 4 | 4 | Not Compatible | Compatible | Not Compatible |
| Bumper | Body | 120 | 4 | 2 | 4 | 6 | Compatible | Compatible | Not Compatible |
| Door handle | Body | 120 | 2 | 6 | 6 | 2 | Compatible | Compatible | Compatible |
| Mirror shell | Body | 90 | 1 | 6 | 2 | 2 | Compatible | Compatible | Not Compatible |
| Anti-fog | Body | 120 | 0 | 4 | 3 | 6 | Compatible | Not Compatible | Compatible |
| Hood cylinder | Body | 60 | 4 | 4 | 1 | 1 | Compatible | Compatible | Compatible |

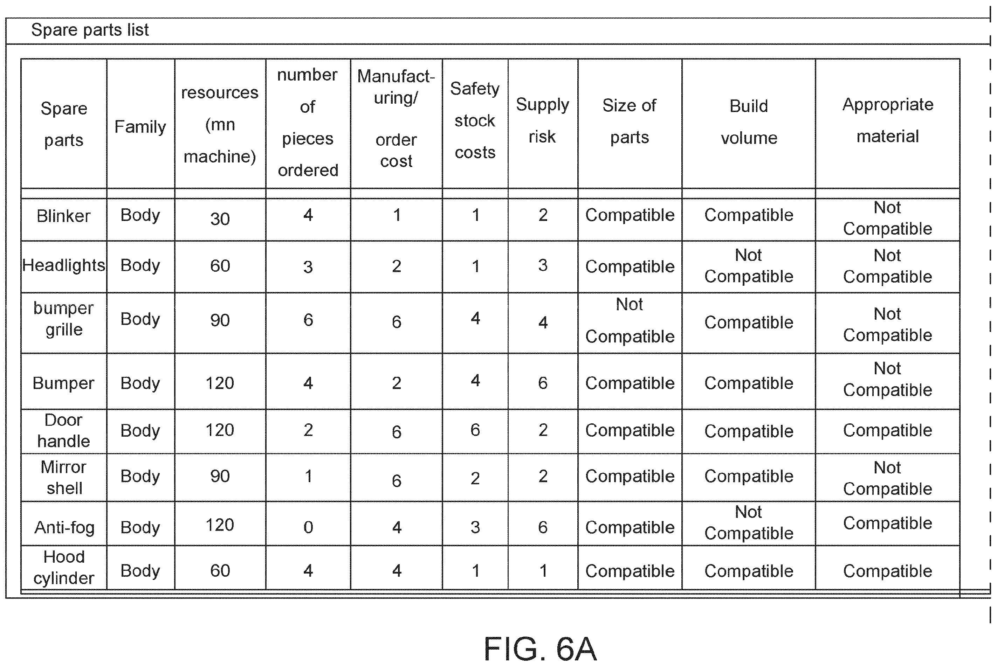

FIG. 6A

| Strength to weight ratio and stiffness to weight ratio | Required dimensional accuracy | Build speed and layer thickness | Support materials and post | Processing | Lead time (day) | profit ($) | Carbon emissions (CO2e) |
|---|---|---|---|---|---|---|---|
| Compatible | Not Compatible | Compatible | Compatible | Compatible | 9 | 106 | 6.166 |
| Compatible | Compatible | Compatible | Compatible | Compatible | 4 | 15 | 7.676 |
| Not Compatible | Compatible | Not Compatible | Not Compatible | Not Compatible | 9 | 45 | 6.794 |
| Not Compatible | Compatible | Compatible | Compatible | Compatible | 8 | 75 | 7.008 |
| Not Compatible | Compatible | Compatible | Compatible | Compatible | 5 | 30 | 6.416 |
| Compatible | Not Compatible | Compatible | Compatible | Compatible | 4 | 106 | 6.268 |
| Compatible | Compatible | Not Compatible | Not Compatible | Not Compatible | 2 | 160 | 3.163 |
| Compatible | Compatible | Compatible | Compatible | Compatible | 2 | 75 | 7.179 |

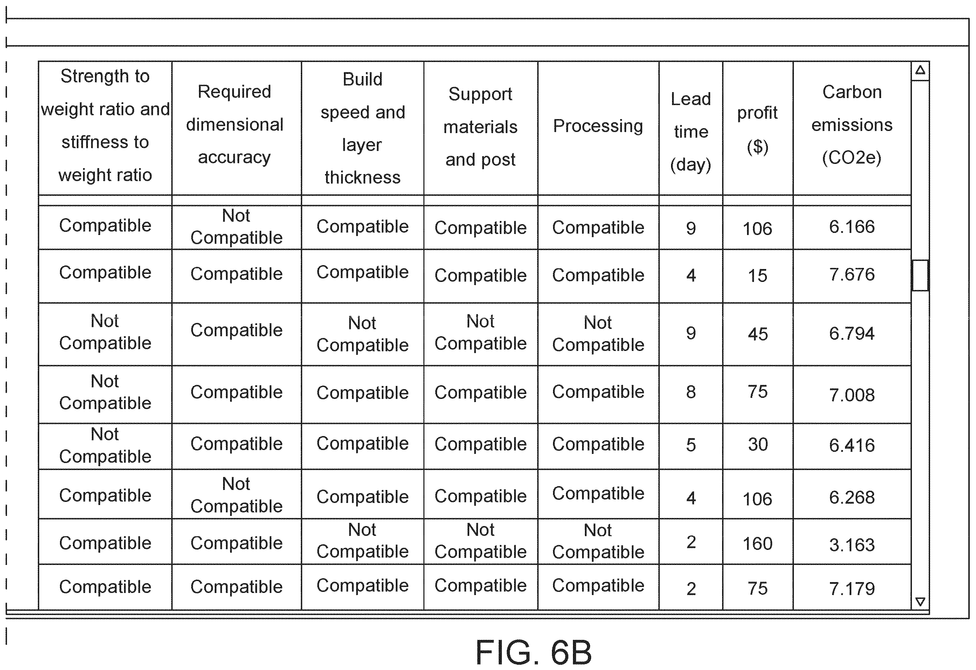

FIG. 6B

Do you have any part that you want to see (or not) in your portfolio ?

Explore the available parts and take an action

## Spare parts list

| Spare parts | Family | resources (mn machine) | number of pieces ordered |
|---|---|---|---|
| Hand brake cable | Braking | 60 | 2 |
| Brake pads & discs kit | Braking | 60 | 2 |
| Wheel cylinder | Braking | 30 | 5 |
| Brake master cylinder | Braking | 150 | 2 |
| Brake light switch | Braking | 120 | 2 |
| Brake caliper guide sleeve | Braking | 90 | 4 |
| Brake drum | Braking | 30 | 2 |
| Brake shoe accessory kit | Braking | 120 | 2 |
| Hand brake shoes | Braking | 90 | 5 |
| Brake vacuum pump | Braking | 150 | 4 |

## Wheel cylinder

| | |
|---|---|
| Size of parts | Not compatible |
| Build volume | Not compatible |
| Appropriate material | Not compatible |
| Strength to weight ratio and stiffness to weight ratio | Not compatible |
| Required dimensional accuracy | Not compatible |
| Build speed and layer thickness | Not compatible |
| Processing | Compatible |
| Support materials and post | Compatible |

Wheel cylinder manufacture order costs

5.0
4.5
4.0
3.5
3.0
2.5
2.0
1.5
1.0
0.5

Supply

[ Reject ]     [ Accept ]

FIG. 7

EP 4 276 556 B1

▽ Portfolio status

| Quantitative criteria | | | | |
|---|---|---|---|---|
| Resources (mn machine) | Number of pieces ordered | Lead time | Profit | Carbon emissions |
| 20520 | 241 | 1484 | 21810 | 1413.137 |

| Qualitative criteria | | |
|---|---|---|
| Manufacturing/ order costs | Safety stock costs | Supply risk |
| 58% | 58% | 63% |

▷ Portfolio composition

FIG. 8A

▷ Portfolio status

▽ Portfolio composition

Choose the spare parts family to display | Choose ▾

Spare part evaluation

FIG. 8B

FIG. 9

| Qualitative criteria | | | | |
|---|---|---|---|---|
| Resources (mn machine) | Number of pieces ordered | Lead time | Profit | Carbon emissions |
| 16740 | 201 | 1280 | 18150 | 1178 |

| Qualitative criteria | | |
|---|---|---|
| Manufacturing/ order costs | Safety stock costs | Supply risk |
| 57% | 60% | 64% |

▷ Portfolio composition

FIG. 10

EP 4 276 556 B1

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200047414 A1

**Non-patent literature cited in the description**

- **BOUYSSOU, D.** ; **MARCHANT, T.** An axiomatic approach to noncompensatory sorting methods in MCDM, I: the case of two categories. *European Journal of Operational Research*, 2007, vol. 178 (1), 217-245
- **BOUYSSOU, D.** ; **MARCHANT, T.** An axiomatic approach to noncompensatory sorting methods in MCDM, II: more than two categories. *European Journal of Operational Research*, 2007, vol. 178 (1), 246-276
- Aide multicritère à la decision dans le cadre de la problématique du tri: méthodes et applications. **YU, W.** ; **LAMSADE**. Ph.D. thesis. Université Paris Dauphine, 1992
- **BELAHCENE, K.** ; **LABREUCHE, C.** ; **MAUDET, N.** ; **MOUSSEAU, V.** ; **OUERDANE, W.** An efficient SAT formulation for learning multiple criteria non-compensatory sorting rules from examples. *Computers & Operations Research*, 2018, vol. 97, 58-71
- *Mathematical Programming*, 1971, vol. 1, 366-375
- A compact encoding of pseudo-boolean constraints'' into SAT. **HOLLDOBLER, S.** ; **MANTHEY, N.** ; **STEINKE, P.** Advances in Artificial Intelligence. Springer, 2012, 107-118
- **BENAYOUN, R.** ; **MONTGOLFIER, J.** ; **TERGNY, J.** ; **LARITCHEV, O.** Linear programming with multiple objective functions: Step method (STEM). *Mathematical Programming*, 1971, vol. 1, 366-375